# EUROPEAN PATENT APPLICATION

(11) **EP 4 822 495 A1**
(43) Date of publication of application: **14.10.2026**
(21) Application number: 25790620.6
(22) Date of filing: 15.04.2025
(51) Int. Cl.: G06F 3/01, G06F 3/14, G06F 1/16, G06F 3/00, G06V 40/18, G01D 5/14

(54) **WEARABLE ELECTRONIC DEVICE COMPRISING DISPLAY**

(30) Priority: 18.04.2024 KR 20240052109; 04.06.2024 KR 20240073252
(71) Applicant: Samsung Electronics Co., Ltd., Suwon-si, Gyeonggi-do 16677 (KR)
(72) Inventor: OH, Seajung, Suwon-si, Gyeonggi-do 16677 (KR)
(74) Representative: Gulde & Partner
(86) International application number: PCT/KR2025/005102
(87) International publication number: WO 2025/221007

(57) **Abstract**

According to an embodiment, a wearable electronic device may be provided. The wearable electronic device may comprise: a housing; a first display disposed in the housing; a second display disposed in the housing so as to be spaced apart from the first display; a position movement assembly disposed in the housing and configured to move the first display and the second display; a position measurement assembly disposed in the housing and configured to measure the positions of the first display and the second display; and a processor configured to control the position movement assembly such that a first interval, which is an interval between the center of the first display and the center of the second display, is changed on the basis of position data measured by the position measurement assembly. The position measurement assembly may comprise: a first magnetic member disposed around the first display; a first Hall sensor configured to measure the position of the first display on the basis of a change in the magnetic force of the first magnetic member; a second magnetic member around the second display; and a second Hall sensor configured to measure the position of the second display on the basis of a change in the magnetic force of the second magnetic member.

## Description

### [TECHNICAL FIELD]

Embodiments disclosed herein relate to a wearable electronic device including a display.

### [BACKGROUND ART]

Portable electronic devices, such as electronic organizers, portable multimedia players, mobile communication terminals, and tablet PCs, typically incorporate display devices (or display modules) and batteries and the shape of these display devices and batteries has traditionally influenced the external appearance thereof, resulting in bar-type, folder-type, or sliding-type configurations. Recently, advancements in the performance of display devices and batteries have led to reduction in size, enabling the emergence of electronic devices (hereinafter referred to as "wearable electronic devices") that may be worn on various parts of the body, such as the wrist or head, or integrated into clothing.

The wearable electronic devices may include head-mounted devices (head-mounting devices (HMDS)), smart glasses, smart watches (or bands), contact lens-type devices, ring-type devices, clothing/shoes/glove-type devices. These body-worn electronic devices are portable and may improve user accessibility.

For example, a head-mounted device is a device that is worn on the user's head or face and projects an image onto the user's retina, allowing the user to view a virtual image in a three-dimensional space. For example, head-mounted wearable devices may be categorized into see-through types that provide augmented reality (AR) and see-closed types that provide virtual reality (VR). A see-through type head-mounted wearable device may be implemented in the form of glasses, for example and may provide the user with information about buildings and objects in the form of images or text in the space within the user's field of view. The see-closed type head-mounted wearable device outputs independent images to each of the user's eyes, providing exceptional immersion by delivering contents (such as games, movies, streaming, or broadcasts) from a mobile communication terminal or external input in the form of video or audio to a single user wearing the device. Additionally, head-mounted wearable devices may also be used to provide mixed reality (MR), which combines augmented reality (AR) and virtual reality (VR), or extended reality (XR).

Recently, product development related to the head-mounted wearable device has been actively progressing, and the head-mounted wearable device is used for various purposes such as military, gaming, industrial, and medical purposes. Accordingly, there is a growing demand for devices that are smaller and lighter in size while providing high-quality visuals.

The above-described information may be provided as related art for the purpose of assisting in understanding the disclosure. None of the above contents make an assertion or decision as to whether any of the above might be applicable as prior art with regard to the disclosure.

### [DETAILED DESCRIPTION OF THE INVENTION]

### [TECHNICAL SOLUTION]

Aspects of the disclosure are to address at least the above-mentioned problems and/or disadvantages and to provide at least the advantages described below. Accordingly, an aspect of the disclosure is to provide a wearable electronic device including a display.

Additional aspects will be set forth in part in the description which follows and, in part, will be apparent from the description, or may be learned by practice of the presented embodiments.

According to an embodiment, a wearable electronic device may be provided. The wearable electronic device may include a housing, a first display disposed at the housing, a second display disposed spaced apart from the first display at the housing, a position movement assembly disposed in the housing and configured to move the first display and the second display, a position measurement assembly disposed in the housing and configured to measure a position of the first display and the second display, and a processor configured to control the position movement assembly to change a first distance corresponding to a distance between a center of the first display and a center of the second display, based on position data measured by the position measurement assembly. The position measurement assembly may include a first magnetic member disposed around the first display, a first Hall sensor configured to measure a position of the first display, based on a change in magnetic force of the first magnetic member, a second magnetic member disposed around the second display, and a second Hall sensor configured to measure a position of the second display, based on a change in magnetic force of the second magnetic member.

### [BRIEF DESCRIPTION OF DRAWINGS]

The above and other aspects, features, and/or advantages of an embodiment of the disclosure will be more apparent from the following detailed description taken with reference to the accompanying drawings.
FIG. 1 is a block diagram illustrating an electronic device in a network environment according to an embodiment of the disclosure.
FIG. 2 is a perspective view illustrating an internal configuration of a wearable electronic device according to an embodiment of the disclosure.
FIG. 3A is a perspective view illustrating a front surface of a wearable electronic device according to an embodiment of the disclosure.
FIG. 3B is a perspective view illustrating a rear surface of a wearable electronic device according to an embodiment of the disclosure.
FIG. 4 is a perspective view of a wearable electronic device according to an embodiment of the disclosure.
FIG. 5A is a schematic perspective view illustrating a front surface of a wearable electronic device according to an embodiment of the disclosure.
FIG. 5B is a schematic perspective view illustrating a state where a front cover of the wearable electronic device of FIG. 5A is removed according to an embodiment of the disclosure.
FIG. 6A is a schematic perspective view illustrating a rear surface of a wearable electronic device according to an embodiment of the disclosure.
FIG. 6B is a schematic perspective view illustrating a state where a rear cover of the wearable electronic device of FIG. 6A is removed according to an embodiment of the disclosure.
FIG. 6C is a schematic perspective view illustrating a position measurement assembly of a wearable electronic device according to an embodiment of the disclosure.
FIG. 7 is a perspective view illustrating an operation of a position movement assembly of a wearable electronic device according to an embodiment of the disclosure.
FIGS. 8A and 8B are a schematic rear view and a schematic plan view, respectively, illustrating a first camera and a second camera of a wearable electronic device according to an embodiment of the disclosure.
FIGS. 9A and 9B are a schematic rear view and a schematic plan view, respectively, illustrating some components of a wearable electronic device according to an embodiment of the disclosure.
FIGS. 10A and 10B are schematic rear views illustrating a movement of a first display and a second display of a wearable electronic device according to an embodiment of the disclosure.
FIG. 10C is a graph depicting a change in magnetic force of a first magnetic member and a second magnetic member according to a movement of a first display and a second display of a wearable electronic device according to an embodiment of the disclosure.
FIGS. 11A and 11B are graphs depicting a relationship between positions of a first display and a second display and positions of a first hole sensor and a second hole sensor of a wearable electronic device according to an embodiment of the present disclosure.
FIG. 12 is a schematic rear view illustrating some components of a wearable electronic device according to an embodiment of the disclosure.
FIG. 13 is a schematic rear view illustrating some components of a wearable electronic device according to an embodiment of the disclosure.
FIG. 14 is a schematic perspective view illustrating a first display and a first movement member of a wearable electronic device according to an embodiment of the disclosure.
FIG. 15 is a schematic perspective view illustrating a first magnetic member and a portion of a support structure of a wearable electronic device according to an embodiment of the disclosure.
FIG. 16A is a schematic perspective view illustrating a first display and a first movement member of a wearable electronic device according to an embodiment of the disclosure.
FIG. 16B is a schematic perspective view illustrating a first display and a first movement member of a wearable electronic device according to an embodiment of the disclosure.
FIG. 17 is a sectional view taken along line C-C' of FIG. 16B.
FIGS. 18A and 18B are procedural flowcharts illustrating a control method for a wearable electronic device including a display, according to an embodiment of the disclosure.
FIG. 19A is a procedural flowchart of a control method for determining and recommending a need for position adjustment of a display of a wearable electronic device, according to an embodiment of the disclosure.
FIG. 19B is a view illustrating a guide user interface (UI) provided to recommend position adjustment of a display of a wearable electronic device according to an embodiment of the disclosure.
FIGS. 20A and 20B are procedural flowcharts of a control method for determining and recommending a need for position adjustment of a display or proper wearing of a wearable electronic device according to an embodiment of the disclosure.
FIG. 20C is a view illustrating a guide UI provided to recommend proper wearing of a wearable electronic device according to an embodiment of the disclosure.

Throughout the accompanying drawings, similar parts, components, and/or structures may be assigned similar reference numbers.

### [MODE FOR CARRYING OUT THE INVENTION]

The following description with reference to the accompanying drawings is provided to assist in a comprehensive understanding of various embodiments of the disclosure as defined by the claims and their equivalents. It includes various specific details to assist in that understanding but these are to be regarded as merely exemplary. Accordingly, those of ordinary skill in the art will recognize that various changes and modifications of the various embodiments described herein can be made without departing from the scope and spirit of the disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the disclosure. Accordingly, it should be apparent to those skilled in the art that the following description of various embodiments of the disclosure is provided for illustration purpose only and not for the purpose of limiting the disclosure as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

A wearable electronic device implementing augmented reality, virtual reality, mixed reality and/or extended reality may generally be used while worn on the user's head or face. For example, a display configured to output an image or visual information in the form of light may be placed at a fairly close distance to the user's eyes. When the display and the user's eyes are placed at a fairly close distance, there may be challenges in configuring an optical system to guide or focus light into the user's eyes. For example, to reduce the size and weight of the wearable electronic device, the size or number of lenses may be limited, and it may be difficult to implement an optical system that may provide good image quality with a limited number of lenses. In an embodiment, for an environment where the display and the user's eyes are placed at a fairly close distance, an optical system with a pancake lens structure may be useful for providing good image quality while using a limited number of lenses. The optical system of the pancake lens structure may achieve a sufficient optical path length relative to a mechanical length (e.g., total lens length) thereof by reflecting light at least twice in the path from the display output to the user's eye. The pancake lens structure may provide good image quality while having a reduced size. Refraction or scattering of light may increase due to repeated reflection structures. For example, when refraction or scattering of light increases, image quality may deteriorate due to interference of refracted or scattered light.

An embodiment of the disclosure is provided to at least address the problems and/or shortcomings described above and at least provide the advantages described later, and may provide a wearable electronic device including a lens assembly that provides good image quality with easy aberration control.

An embodiment of the disclosure may provide a wearable electronic device including a lens assembly that provides good image quality while having a reduced size and/or weight.

An embodiment of the disclosure may provide a wearable electronic device that, through reduction in size and/or weight, reduces user fatigue in a state where the wearable electronic device is worn.

The technical subjects pursued in the disclosure may not be limited to the above-mentioned technical subjects, and other technical subjects which are not mentioned may be clearly understood from the following descriptions by those skilled in the art to which the disclosure pertains.

The following description made with reference to the accompanying drawings may provide an understanding of various exemplary implementations of the disclosure including the claims and equivalents thereof. An exemplary embodiment set forth in the following description includes various particular details to help the understanding, but is considered one of various exemplary embodiments. Therefore, it will be apparent to those skilled in the art that various changes and modifications may be made to various implementations described herein without departing from the scope and technical idea of the disclosure. In addition, descriptions of well-known functions and configurations may be omitted for clarity and brevity.

The terms and words used in the following description and claims are not limited to bibliographical meanings, but may be used to clearly and consistently describe the various embodiments set forth herein. Therefore, it will be apparent to those skilled in the art that the following description of various implementations of the disclosure is provided only for the purpose of explanation, rather than for the purpose of limiting the disclosure defined as the scope of protection and equivalents thereto.

It should be appreciated that a singular form such as "a," "an," or "the" also includes the meaning as a plural form, unless the context clearly indicates otherwise. Therefore, for example, "a component surface" may mean one or more of component surfaces.

It should be appreciated that the blocks in each flowchart and combinations of the flowcharts may be performed by one or more computer programs which include computer-executable instructions. The entirety of the one or more computer programs may be stored in a single memory device or the one or more computer programs may be divided with different portions stored in different multiple memory devices.

Any of the functions or operations described herein can be processed by one processor or a combination of processors. The one processor or the combination of processors is circuitry performing processing and includes circuitry like an application processor (AP, e.g., a central processing unit (CPU)), a communication processor (CP, e.g., a modem), a graphical processing unit (GPU), a neural processing unit (NPU) (e.g., an artificial intelligence (AI) chip), a wireless-fidelity (Wi-Fi) chip, a Bluetooth^{™} chip, a global positioning system (GPS) chip, a near field communication (NFC) chip, connectivity chips, a sensor controller, a touch controller, a finger-print sensor controller, a display drive integrated circuit (IC), an audio CODEC chip, a universal serial bus (USB) controller, a camera controller, an image processing IC, a microprocessor unit (MPU), a system on chip (SoC), an IC, or the like.

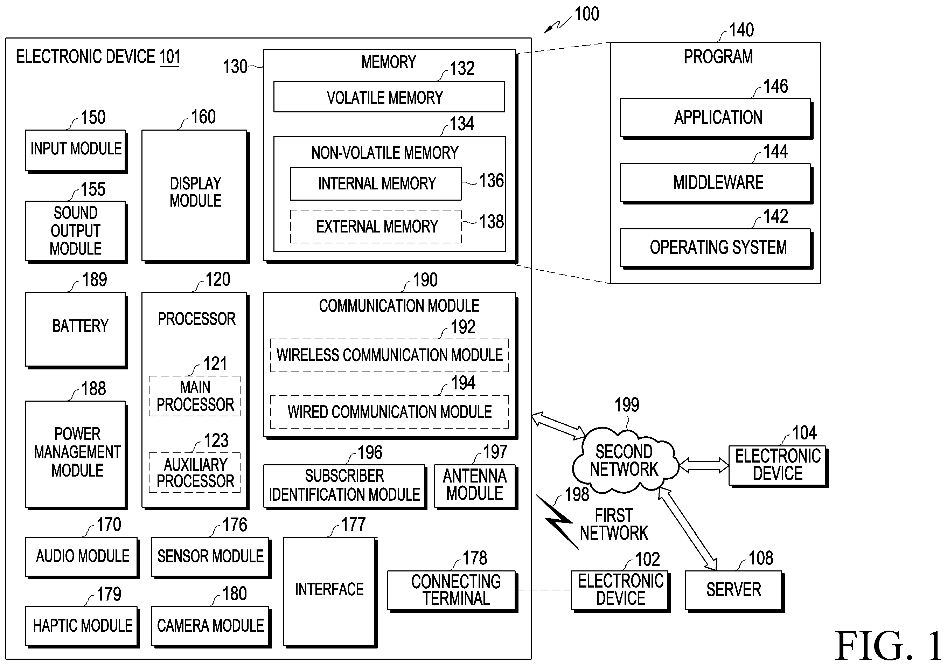

FIG. 1 is a block diagram illustrating an electronic device in a network environment according to an embodiment of the disclosure. Referring to FIG. 1, an electronic device 101 in a network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134. The non-volatile memory 134 may include internal memory 136 or external memory 138.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a fifth generation (5G) network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a fourth generation (4G) network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the millimeter wave (mmWave) band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102 or 104, or the server 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., a smart home, a smart city, a smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program) including one or more instructions that are stored in a storage medium (e.g., internal memory or external memory) that is readable by a machine (e.g., the electronic device). For example, a processor (e.g., the processor) of the machine (e.g., the electronic device) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

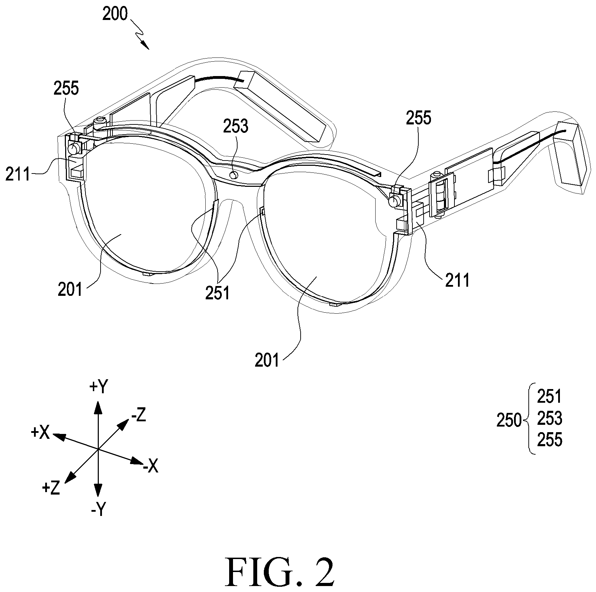

FIG. 2 is a perspective view illustrating an internal configuration of a wearable electronic device according to an embodiment of the disclosure.

Referring to FIG. 2, the wearable electronic device 200 according to an embodiment may include at least one of a light output module 211, a display member 201, and a camera module 250. For example, the electronic device 200 may include the entirety or a portion of components of the electronic device 101 described with reference to FIG. 1.

According to an embodiment, the light output module 211 may include a light source capable of outputting an image and a lens configured to guide the image to the display member 201. According to an embodiment, the light output module 211 may include at least one of a liquid crystal display (LCD), a digital mirror device (DMD), a liquid crystal on silicon (LCoS), an organic light-emitting diode (OLED), or a micro light emitting diode (micro-LED).

According to an embodiment, the display member 201 may include an optical waveguide (e.g., a waveguide). According to an embodiment, an output image of the light output module 211 incident on one end of the optical waveguide may be propagated within the optical waveguide and provided to a user. According to an embodiment, the optical waveguide may include at least one of a diffraction element (e.g., a diffractive element (DOE) and a holographic optical element (HOE)) or a reflection element (e.g., a reflective mirror). For example, the optical waveguide may guide an output image of the light output module 211 to the user's eye by using at least one of a diffraction element or a reflection element.

According to an embodiment, the camera module 250 may capture a still image and/or video. According to an embodiment, the camera module 250 may be disposed within the lens frame and around the display member 201.

According to an embodiment, a first camera module 251 may capture and/or recognize the user's eye (e.g., a pupil or an iris) or a trajectory of a gaze. According to an embodiment, the first camera module 251 may periodically or aperiodically transmit information (e.g., trajectory information) on tracking of the user's eye and the trajectory of a gaze to the processor (e.g., the processor 120 in FIG. 1).

According to an embodiment, the second camera module 253 may capture an image of the outside.

According to an embodiment, a third camera module 255 may be used for hand detection and tracking and recognition of a user gesture (e.g., a hand gesture). The third camera module 255 according to an embodiment may be used for head tracking of 3 degrees of freedom (3DoF) and 6DoF, and location (space, environment) recognition and/or movement recognition. The second camera module 253 may be used for hand detection and tracking and user gesture recognition according to an embodiment. According to an embodiment, at least one of the first camera module 251 to the third camera module 255 may be replaced with a sensor module (e.g., a light detection and ranging (LiDAR) sensor). For example, the sensor module may include at least one of a vertical cavity surface emitting laser, an infrared sensor, and/or a photodiode.

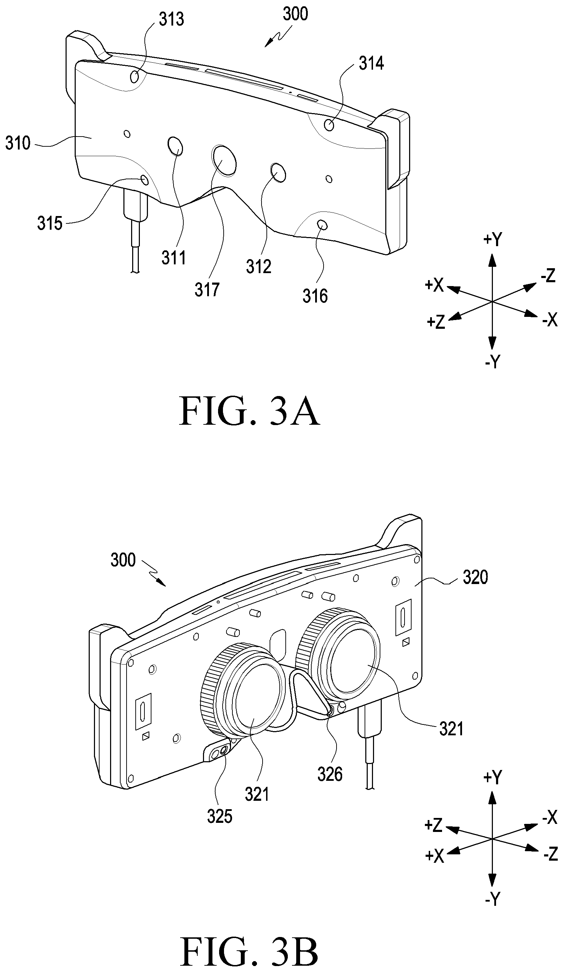

FIG. 3A is a perspective view illustrating a front surface of a wearable electronic device according to an embodiment of the disclosure. FIG. 3B is a perspective view illustrating a rear surface of a wearable electronic device according to an embodiment of the disclosure.

Referring to FIGS. 3A and 3B, in an embodiment, a depth sensor 317 and/or camera modules 311, 312, 313, 314, 315, and 316 for acquiring information related to a peripheral environment of the wearable electronic device 300 may be arranged on a first surface 310 of the wearable electronic device 300 (e.g., a housing).

In an embodiment, the camera modules 311 and 312 may acquire an image related to a peripheral environment of the wearable electronic device 300. In an embodiment, the camera modules 311 and 312 may be used for hand detection and tracking or user gesture recognition or detection. In an embodiment, the camera modules 313, 314, 315, and 316 may acquire an image in a state where the wearable electronic device 300 is worn by the user. The camera modules 313, 314, 315, and 316 may be used for hand detection and tracking and recognition of a user gesture (e.g., a hand gesture). The camera modules 313, 314, 315, and 316 may be used for head tracking of 3DoF and 6DoF, location (space, environment) recognition, and/or movement recognition.

In an embodiment, the depth sensor 317 may be configured to transmit a signal and receive a signal reflected from a subject and may be used to identify a distance to an object, such as time of flight (TOF). Additionally, or in place of the depth sensor 317, the camera modules 313, 314, 315, and 316 may identify a distance to an object.

According to an embodiment, a face recognition camera module 325 or 326 and/or a display device 321 may be arranged on a second surface 320 of the housing.

In an embodiment, the face recognition camera module 325 or 326 close to the display 321 may be used to recognize the user's face or may recognize and/or track both eyes of the user.

In an embodiment, the display device 321 may be disposed on the second surface 320 of the wearable electronic device 300. In an embodiment, the wearable electronic device 300 may not include the camera modules 315 and 316 among multiple camera modules 313, 314, 315, and 316. Although not shown in FIGS. 3A and 3B, the wearable electronic device 300 may further include at least one of components shown in FIG. 2.

As described above, the wearable electronic device 300 according to an embodiment may have a form factor to be mounted on the user's head. The wearable electronic device 300 may further include a strap and/or wearing member for securing same onto a user's body part. The wearable electronic device 300 may provide a user experience based on augmented reality, virtual reality, and/or mixed reality in a state of being mounted on the user head.

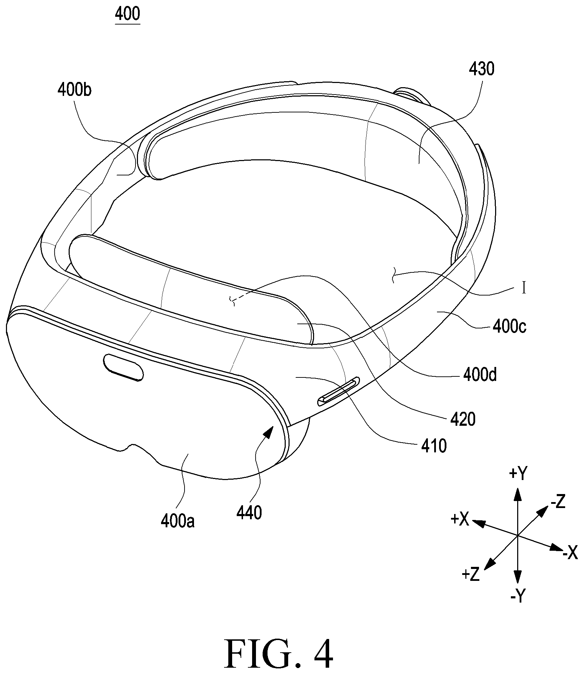

FIG. 4 is a perspective view of a wearable electronic device according to an embodiment of the disclosure.

Referring to FIG. 4, the wearable electronic device 400 may include a head mounting device (HMD) which may provide an image in front of the user's eye. The configuration of the electronic device 400 of FIG. 4 may be entirely or partially identical to that of the wearable electronic device 200 in FIG. 2 and/or the wearable electronic device 300 in FIGS. 3A and 3B.

According to an embodiment, the wearable electronic device 400 may include a housing 410, 420, or 430 configuring an exterior of the wearable electronic device 400. The housing 410, 420, or 430 may provide a space in which components of the wearable electronic device 400 may be arranged.

According to an embodiment, the wearable electronic device 400 may include a first housing 410 which may surround at least a portion of the user head. According to an embodiment, the first housing 410 may include a first surface 400a facing the outside (e.g., the +Z direction) of the wearable electronic device 400.

According to an embodiment, the first housing 410 may surround at least a portion of an internal space I. For example, the first housing 410 may include a second surface 400B facing the internal space I of the wearable electronic device 400 and a third surface 400c opposite to the second surface 400b. According to an embodiment, the first housing 410 may be coupled to the third housing 430 to have a closed curve shape surrounding the internal space I.

According to an embodiment, the first housing 410 may receive at least a portion of components of the wearable electronic device 400. For example, the light output module, and a circuit board may be arranged in the first housing 410.

According to an embodiment, the wearable electronic device 400 may include one display member 440 corresponding to the left eye and the right eye. The display member 440 may be disposed in the first housing 410. The configuration of the display member 440 of FIG. 4 may be entirely or partially identical to that of the display member 201 of FIG. 2.

According to an embodiment, the wearable electronic device 400 may include a second housing 420 which may be mounted on the user's face. According to an embodiment, the second housing 420 may include a fourth surface 400d at least partially facing the user's face. According to an embodiment, the fourth surface 400d may correspond to a surface in a direction (e.g., the -Z direction) facing the internal space I of the wearable electronic device 400. According to an embodiment, the second housing 420 may be coupled to the first housing 410.

According to an embodiment, the wearable electronic device 400 may include a third housing 430 which may be mounted on the back of the user's head. According to an embodiment, the third housing 430 may be coupled to the first housing 410. According to an embodiment, the third housing 430 may receive at least a portion of components of the wearable electronic device 400. For example, a battery (e.g., the battery 189 in FIG. 1) may be disposed in the third housing 430.

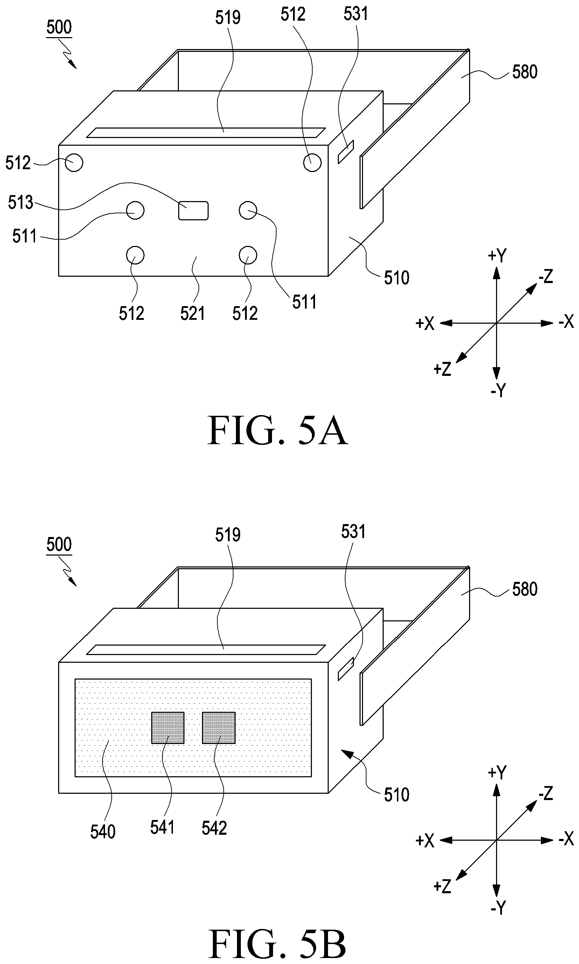

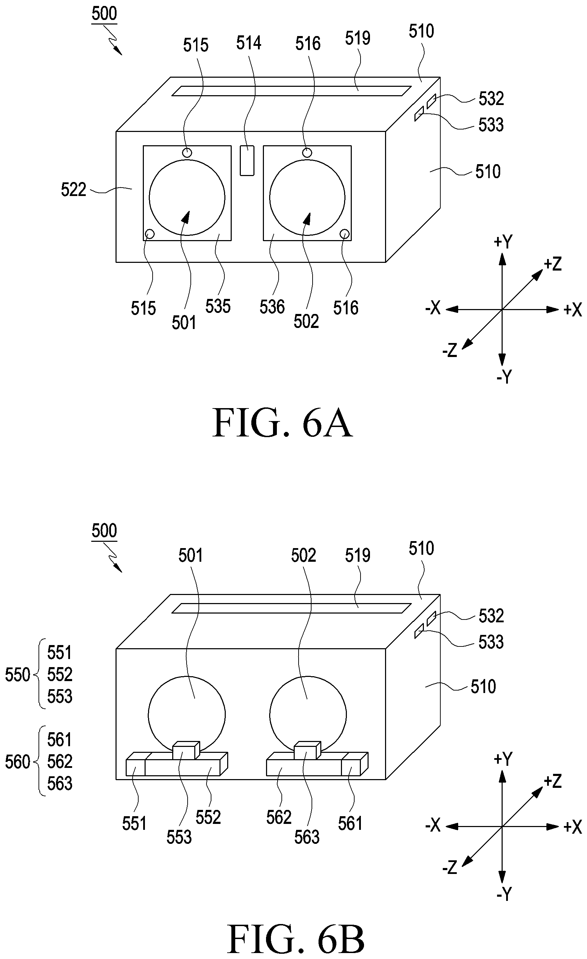

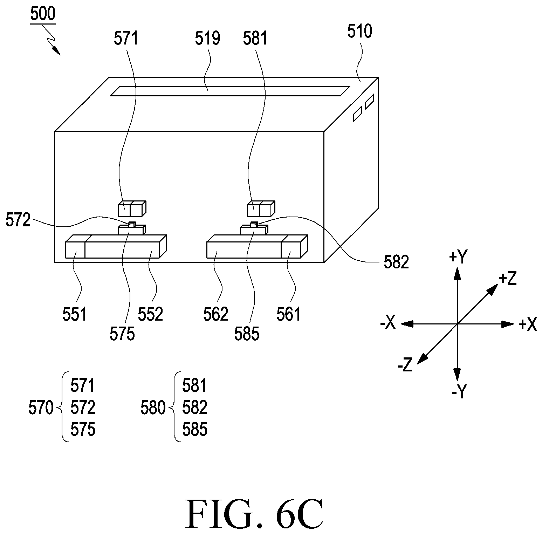

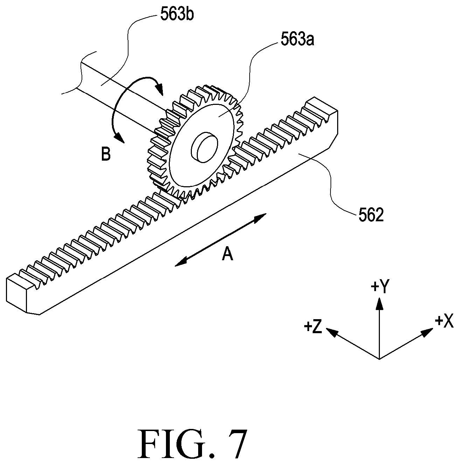

FIG. 5A is a schematic perspective view illustrating a front surface of a wearable electronic device according to an embodiment of the disclosure. FIG. 5B is a schematic perspective view illustrating a state where a front cover of a wearable electronic device of FIG. 5A is removed according to an embodiment of the disclosure. FIG. 6A is a schematic perspective view illustrating a rear surface of a wearable electronic device according to an embodiment of the disclosure. FIG. 6B is a schematic perspective view illustrating a state where a rear cover of a wearable electronic device of FIG. 6A is removed according to an embodiment of the disclosure. FIG. 6C is a schematic perspective view illustrating a position measurement assembly of a wearable electronic device according to an embodiment of the disclosure. FIG. 7 is a perspective view illustrating an operation of a position movement assembly of a wearable electronic device according to an embodiment of the disclosure.

Referring to FIGS. 5C to 6C, a wearable electronic device 500 may correspond to a head mounting device (HMD) which may provide an image (e.g., an image to implement augmented reality, virtual reality, mixed reality, and/or extended reality) in front of the user's eye. The configuration of the wearable electronic device 500 in FIGS. 5A and 5B may be entirely or partially identical to that of the wearable electronic device 200 in FIG. 2, the wearable electronic device 300 in FIGS. 3A and 3B, and/or the wearable electronic device 400 in FIG. 4.

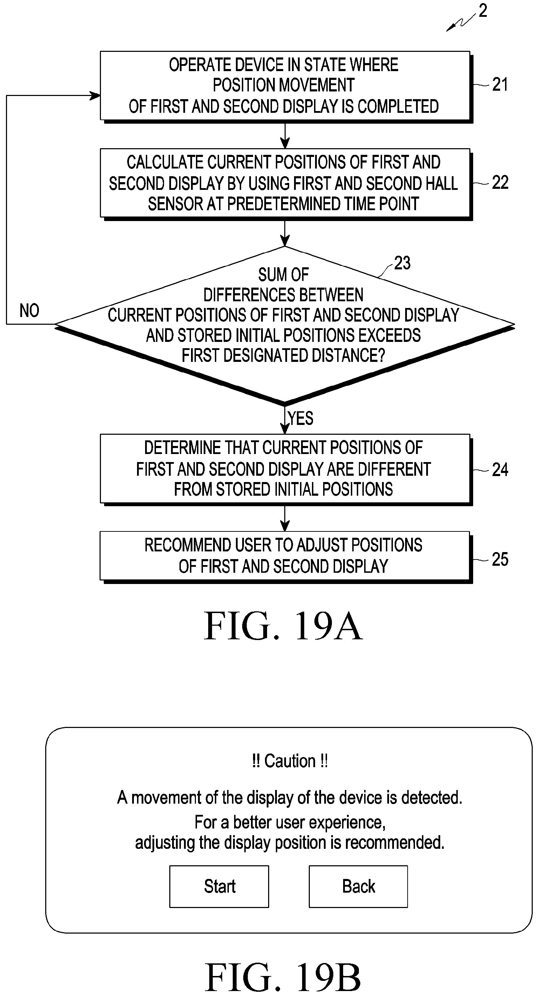

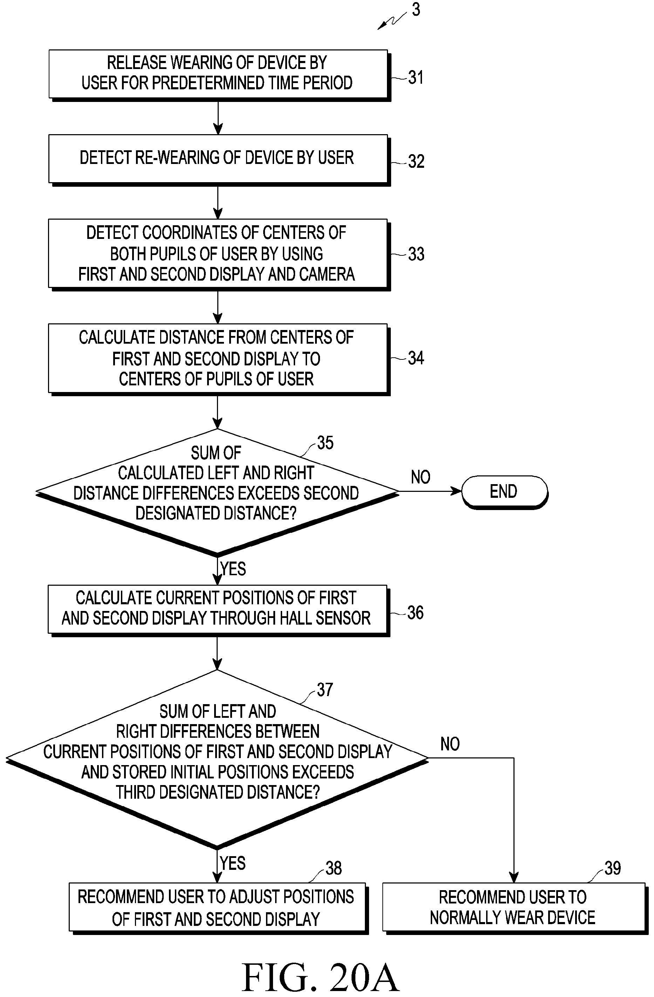

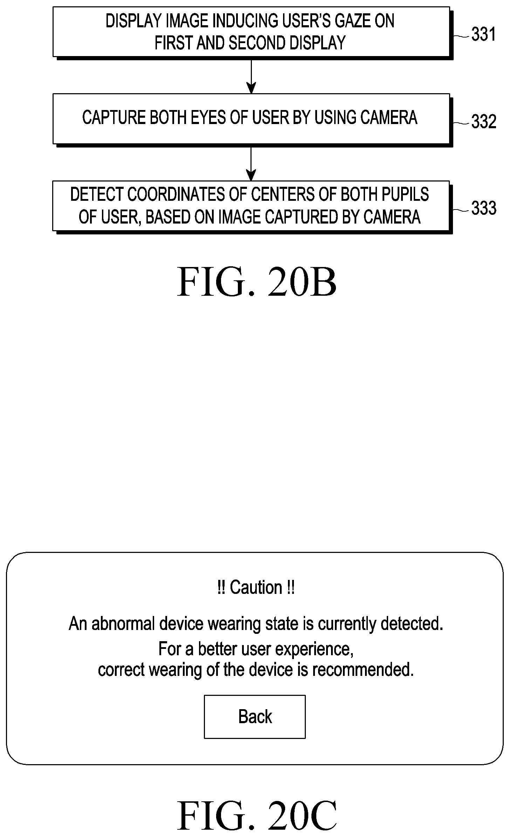

The wearable electronic device 500 according to an embodiment (embodiments) of the disclosure may be configured to adjust an inter-pupillary distance (IPD). The wearable electronic device 500 according to an embodiment (embodiments) of the disclosure may measure portions of the first and second display 501 and 502 by using a position measurement assembly 570 or 580. As described below with reference to FIGS. 19A, 19B, 20A, 20B, and 20C, the wearable electronic device 500 according to an embodiment (embodiments) of the disclosure may provide a function to detect a state where the first and second display 501 and 502 are moved unintentionally or detect a state where the user is wearing the wearable electronic device 500 incorrectly after the user wears the wearable electronic device 500, and notify the user of these states.

Referring to FIGS. 5A and 5B, the wearable electronic device 500 may include a housing 510, a front cover 521 disposed on a front surface (e.g., the +Z direction) of the housing 510, and front cameras 511, 512, and 513 disposed to detect an image of an external environment of the wearable electronic device 500 through a through-hole disposed on the front cover 521. According to an embodiment, the wearable electronic device 500 may include a wearing member 580 (e.g., a band or a frame) connected to the housing 510 to be worn on the user's body (e.g., the head). According to an embodiment, the wearable electronic device 500 may include an opening 519 configured to dissipate heat inside the housing 510. For example, the opening 519 may be configured by opening a partial area of the housing 510 in the form of a slit or through hole. According to an embodiment, the wearable electronic device 500 may include a first input member 531 (e.g., a power button) disposed on a portion (e.g., a lateral surface or the X direction surface) of the housing 510.

According to an embodiment, a first front camera (cameras) 511 (e.g., the camera module 311 or 312 in FIG. 3A) among the front cameras 511, 512, and 513 may be configured to be used for hand detection and tracking or user gesture recognition or detection. According to an embodiment, a second front camera (cameras) 512 (e.g., the camera module 313, 314, 315, or 316 in FIG. 3A) among the front cameras 511, 512, and 513 may be used for hand detection and tracking, user gestures (e.g., hand gestures) and/or 3DoF (degree of freedom), 6DoF head tracking, position (space, environment) recognition and/or movement recognition. In an embodiment, a third front camera (cameras) 513 (e.g., the depth sensor 317 in FIG. 3A) among the front cameras 511, 512, and 513 may be configured to transmit a signal and receive a signal reflected from a subject and may be used to identify a distance to an object, such as time of flight (TOF). For example, additionally or in place of the third front camera 513, other front cameras 511 and 512 may identify the distance to the object.

Referring to FIG. 5B, according to an embodiment, the wearable electronic device 500 may include a circuit board 540 (e.g., a printed circuit board) disposed in the housing 510, memory 541 (e.g., the memory 130 in FIG. 1) disposed on the circuit board 540, and a processor 542 (e.g., the processor 120 in FIG. 1).

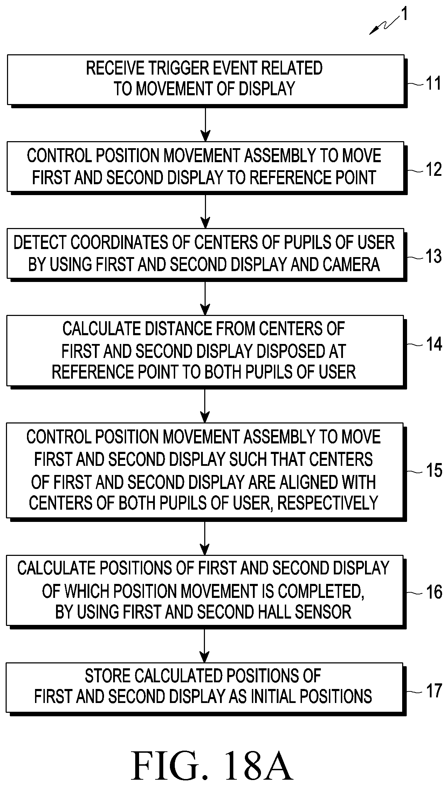

The processor 542 may execute instructions stored in the memory 541 to control operations of the wearable electronic device 500 of FIGS. 18A, 18B, 19A, 19B, and 20A to 20C. For example, the processor 542 may correspond to multiple processors which may divide multiple operations to processors and collectively perform the operations.

Referring to FIG. 6A, according to an embodiment, the wearable electronic device 500 may include a rear cover 522 disposed on a rear surface (e.g., the -Z direction surface) of the housing 510, a first display 501, a second display 502, a first injection-molded body 535 disposed at an edge of the first display 501, a second injection-molded body 536 disposed at an edge of the second display 502, a rear sensor 514, a first camera (or first rear camera) 515 (e.g., the face recognition camera module 325 in FIG. 3B) disposed around the first display 501, and a second camera (or second rear camera) 516 (e.g., the face recognition camera module 326 in FIG. 3B) disposed around the second display 502.

According to an embodiment, the rear sensor 514 (e.g., the depth sensor) may be disposed between the first display 501 and the second display 502. The rear sensor 514 may be configured to transmit a signal and receive a signal reflected from a subject and may be used to identify a distance to an object, such as time of flight (TOF). According to an embodiment, the first and second camera 515 and 516 may be used to recognize the user's face or may be configured to recognize and/or track both eyes of the user.

Referring to FIGS. 6B and 6C, according to an embodiment, the wearable electronic device 500 may include a position movement assembly 550 or 560 connected to the first and second display 501 and 502 and a position measurement assembly 570 or 580 configured to detect positions of the first and second display 501 and 502. According to an embodiment, the wearable electronic device 500 may include a second input member 532 or 533 (e.g., a volume button) disposed on a lateral surface (e.g., the X direction surface) of the housing 510.

Referring to FIG. 6B, according to an embodiment, the position movement assembly 550 or 560 may include a first movement member 550 configured to move the first display 501 and a second movement member 560 configured to move the second display 502. The first movement member 550 may be disposed closer to the first display 501 compared to the second movement member 560, and the second movement member 560 may be disposed closer to the second display 502 compared to the first movement member 550. According to an embodiment, the position movement assembly 550 or 560 may be configured to move the first display 501 and the second display 502 individually or together in a first axis direction A (e.g., the X-axis direction) of FIG. 7.

Referring to FIGS. 6B and 7, according to an embodiment, the first movement member 550 may include a first motor 551, a first gear 553 rotatably connected to the first motor 551, and a first rail 552 configured to convert a rotation of the first gear 553 into a linear movement according to the first axis direction A. According to an embodiment, the first display 501 may be directly or indirectly connected to the first rail 552 to be moved linearly along the first axis direction A. According to an embodiment, the second movement member 560 may include a second motor 561, a second gear 563 rotatably connected to the second motor 561, and a second rail 562 configured to convert a rotation of the second gear 563 into a linear movement according to the first axis direction A. According to an embodiment, the second display 502 may be directly or indirectly connected to the second rail 562 to be moved linearly along the first axis direction A.

Referring to FIG. 6C, according to an embodiment, the position measurement assembly 570 or 580 may include a first measurement member 570 configured to detect a position of the first display 501 and the second measurement member 580 may be configured to detect a position of the second display 502. The first measurement member 570 may be disposed closer to the first display 501 compared to the second measurement member 580, and the second measurement member 580 may be disposed closer to the second display 502 compared to the first measurement member 570.

According to an embodiment, the first measurement member 570 may include a first magnetic member 571 disposed around the first display 501 and a first Hall sensor 572 configured to measure a position of the first display 501 based on a change in magnetic force of the first magnetic member 571. According to an embodiment, the second measurement member 580 may include a second magnetic member 581 disposed around the second display 502 and a second Hall sensor 582 configured to measure a position of the second display 502 based on a change in magnetic force of the second magnetic member 581.

According to an embodiment, the first magnetic member 571 and the second magnetic member 581 may be fixedly disposed with respect to the housing 510, and the first Hall sensor 572 and the second Hall sensor 582 may be disposed to be moved together with the first display 501 and the second display 502 by the first movement member 550 and the second movement member 560, respectively. Referring to FIG. 6C, according to an embodiment, the first measurement member 570 may further include a first connection structure 575 configured to connect the first Hall sensor 572 to the first rail 552 of the first movement member 550. Referring to FIG. 6C, according to an embodiment, the second measurement member 580 may further include a second connection structure 585 configured to connect the second hole sensor 582 to the second rail 562 of the second movement member 560.

However, according to an embodiment, it may be also possible that the first Hall sensor 572 and the second Hall sensor 582 are fixedly disposed with respect to the housing 510, and the first magnetic member 571 and the second magnetic member 581 are disposed to be moved together with the first display 501 and the second display 502 by the first movement member 550 and the second movement member 560, respectively.

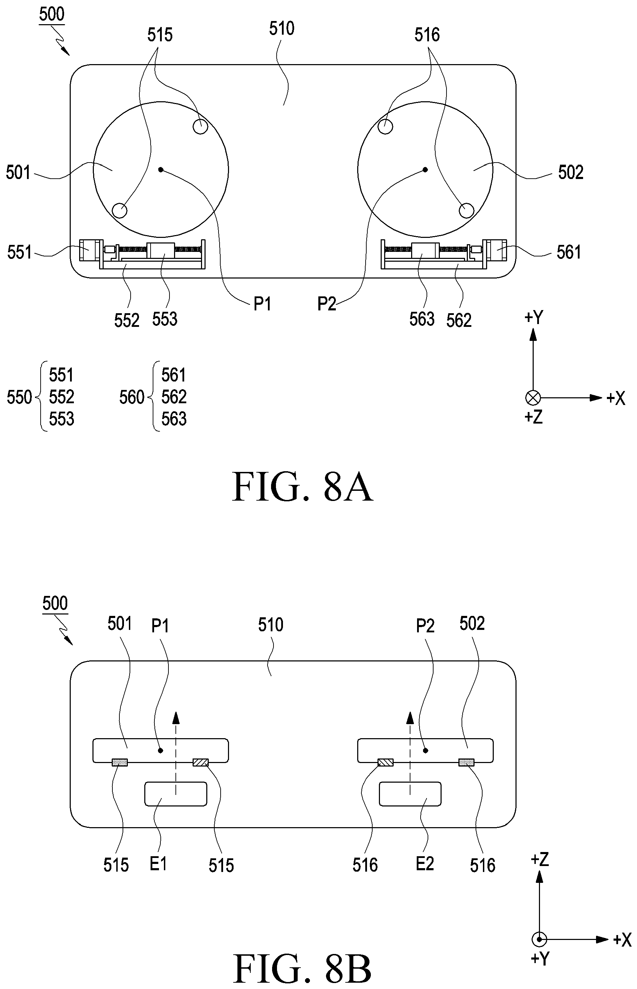

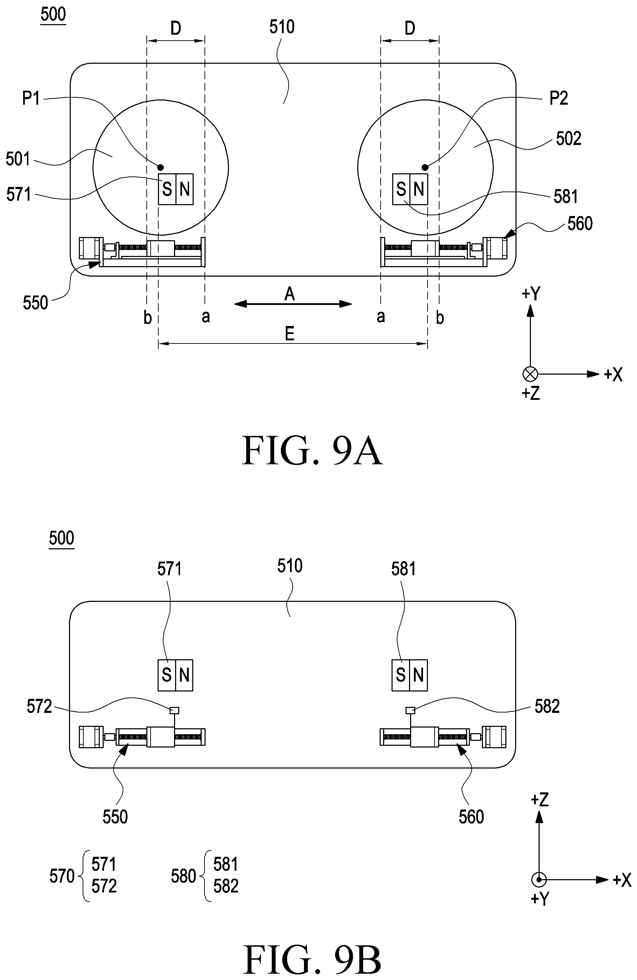

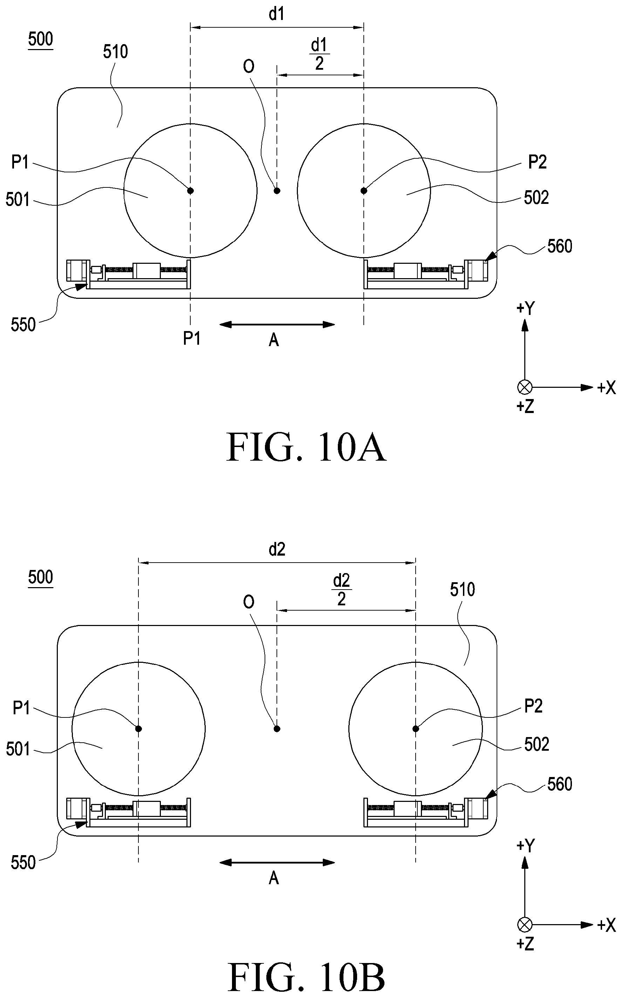

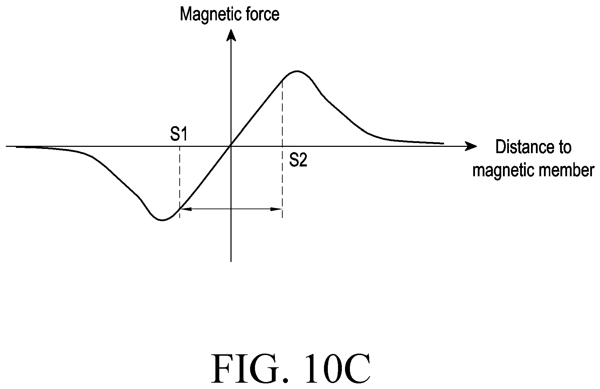

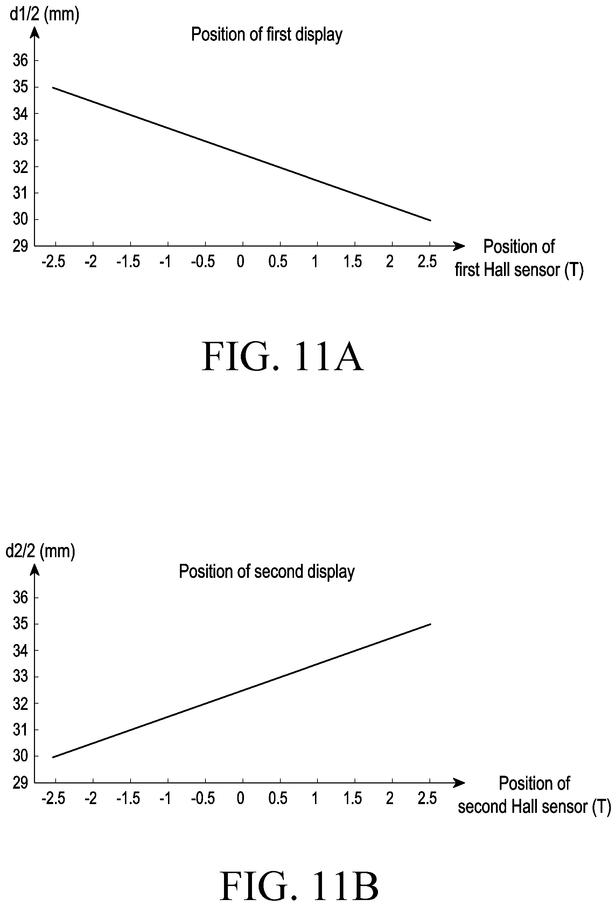

FIGS. 8A and 8B are a schematic rear view and a schematic plan view, respectively, illustrating a first camera and a second camera of a wearable electronic device according to an embodiment of the disclosure. FIGS. 9A and 9B are a schematic rear view and a schematic plan view, respectively, illustrating some components of a wearable electronic device according to an embodiment of the disclosure. FIGS. 10A and 10B are schematic rear views illustrating a movement of a first display and a second display of a wearable electronic device according to an embodiment of the disclosure. FIG. 10C is a graph depicting a change in magnetic force of a first magnetic member and a second magnetic member according to a movement of a first display and a second display of a wearable electronic device according to an embodiment of the disclosure. FIGS. 11A and 11B are graphs depicting a relationship between positions of a first display and a second display and positions of a first hole sensor and a second hole sensor of a wearable electronic device according to an embodiment of the present disclosure.

Referring to FIGS. 8A and 8B, according to an embodiment, the first camera 515 may include multiple camera elements configured to capture an image of one eye E1 (e.g., the left eye) of the user. For example, the multiple camera elements of the first camera 515 may be symmetrically arranged around a center P1 of the first display 501. According to an embodiment, the second camera 516 may include multiple camera elements configured to capture an image of another eye E2 (e.g., the right eye) of the user. For example, the multiple camera elements of the second camera 516 may be symmetrically arranged around a center P2 of the second display 502. In FIG. 8B, dotted lines extending from the user's two eyes E1 and E2 may indicate a gaze direction in which the user is looking at the first and second display 501 and 502.

Referring to FIG. 9A, the first display 501 and the second display 502 may be moved away from each other or closer to each other in the first axis direction A by the position movement assembly 550 or 560. In the disclosure, "first axis direction A" may refer to a direction on or along an imaginary axis passing through the center P1 of the first display 501 and the center P2 of the second display 502, as well as to a direction parallel to the imaginary axis and a direction opposite thereto.

In FIG. 9A, a pair of dotted lines "a" may indicate the center P1 of the first display 501 and the center P2 of the second display 502 in a state where the first display 501 and the second display 502 are arranged closest to each other. FIG. 10A may illustrate a state where the first display 501 and the second display 502 are disposed closest to each other.

In FIG. 9A, a pair of dotted lines "b" may indicate the center P1 of the first display 501 and the center P2 of the second display 502 in a state where the first display 501 and the second display 502 are arranged farthest from each other. FIG. 10B may illustrate a state where the first display 501 and the second display 502 are disposed farthest from each other.

In FIG. 9A, a movement range D may indicate a movement range of the first display 501 and the second display 502 in the first axis direction A. In FIG. 9A, a center spacing E may be a distance between the center P1 of the first display 501 and the center P2 of the second display 502. Referring to FIG. 10A, a minimum value of the center spacing E in a state where the first display 501 and the second display 502 are disposed closest to each other may be denoted by d1, wherein d1/2 is half of d1 and may be a distance from a center O of the wearable electronic device 500 to the center P1 of the first display 501 or the center P2 of the second display 502. Referring to FIG. 10B, a maximum value of the center spacing E in a state where the first display 501 and the second display 502 are disposed farthest from each other may be denoted by d2, wherein d2/2 is half of d2 and may be a distance from the center O of the wearable electronic device 500 to the center P1 of the first display 501 or the center P2 of the second display 502.

In the disclosure, the wearable electronic device 500 may be configured to move the first display 501 and the second display 502 within the movement range D so that the center P1 of the first display 501 and the center P2 of the second display 502 are aligned with the center of the pupil of the user's left eye and the center of the pupil of the user's right eye, respectively. In other words, in the disclosure, the wearable electronic device 500 may be configured to move the first display 501 and the second display 502 within the movement range D so that the center spacing E is similar to or corresponds to the distance between the centers of the pupils of the user's eyes (or interocular distance). For example, the movement range D may be designed or configured by considering the distance (or interocular distance) between the centers of the pupils in both eyes of a typical user with regard to the center spacing E. For example, the center spacing E may be configured to vary in a range from about 55 mm to about 75 mm, and the movement range D may be configured to be about 10 mm, in which case d1 which is the minimum value of the center spacing E shown in FIG. 10A, may be about 55 mm, and d2 which is the maximum value of the center spacing E shown in FIG. 10B, may be about 75 mm. For example, the center spacing E may be configured to vary in a range from about 60 mm to about 70 mm, and the movement range D may be configured to be about 5 mm, but the aforementioned values are not limitative and the design may be freely changed, and in which case d1 which is the minimum value of the center spacing E shown in FIG. 10A, may be about 60 mm, and d2 which is the maximum value of the center spacing E shown in FIG. 10B, may be about 70 mm.

According to an embodiment, the first magnetic member 571 and the first Hall sensor 572 may be configured such that a distance between the first magnetic member 571 and the first Hall sensor 572 is within a designated distance (e.g., about 2 mm) such that the accuracy of the magnetic force change of the first magnetic member 571 detected by the first Hall sensor 572 may be ensured. Similarly, the second magnetic member 581 and the second Hall sensor 582 may be configured such that a distance between the second magnetic member 581 and the second Hall sensor 582 is within a designated distance (e.g., about 2 mm) such that the accuracy of the magnetic force change of the second magnetic member 581 detected by the second Hall sensor 582 may be ensured.

FIG. 10C may show a change in magnetic force of the first and second magnetic member 571 and 581 detected by the first and second Hall sensor 572 and 582 moved together when the first and second display 501 and 502 linearly move. For example, in a region where the magnetic force changes linearly between S1 and S2 in FIG. 10C, the magnitude of the magnetic force may correspond to the position of the first and second display 501 and 502, and the position of the first and second display 501 and 502 may be identified accordingly. In FIGS. 11A and 11B, the vertical axis may represent a distance (in mm) between the centers P1 and P2 of the first and second display 501 and 502 and the center O of the wearable electronic device 500, and the horizontal axis may represent a magnetic force (in tesla (T)) detected by the first and second Hall sensors 572 and 582. The wearable electronic device 500 according to an embodiment (embodiments) of the disclosure may detect a relative position of the first and second Hall sensors 572 and 582 and the first and second magnetic members 571 and 581 from the magnetic force detected by the first and second Hall sensors 572 and 582. In the horizontal axis, a state where the magnetic force is zero (T) may correspond to a state where the centers of the first and second Hall sensor 572 and 582 and the centers of the first and second magnetic member 571 and 581 are aligned. In the horizontal axis, a state where the magnetic force is +2.5 (T) may correspond to a state where the first and second display 501 and 502 are disposed closest to each other, and a state where the magnetic force is -2.5 (T) may correspond to a state where the first and second display 501 and 502 are disposed closest to each other. However, the figures on the vertical and horizontal axes of FIGS. 11A and 11B are illustrative and not limitative.

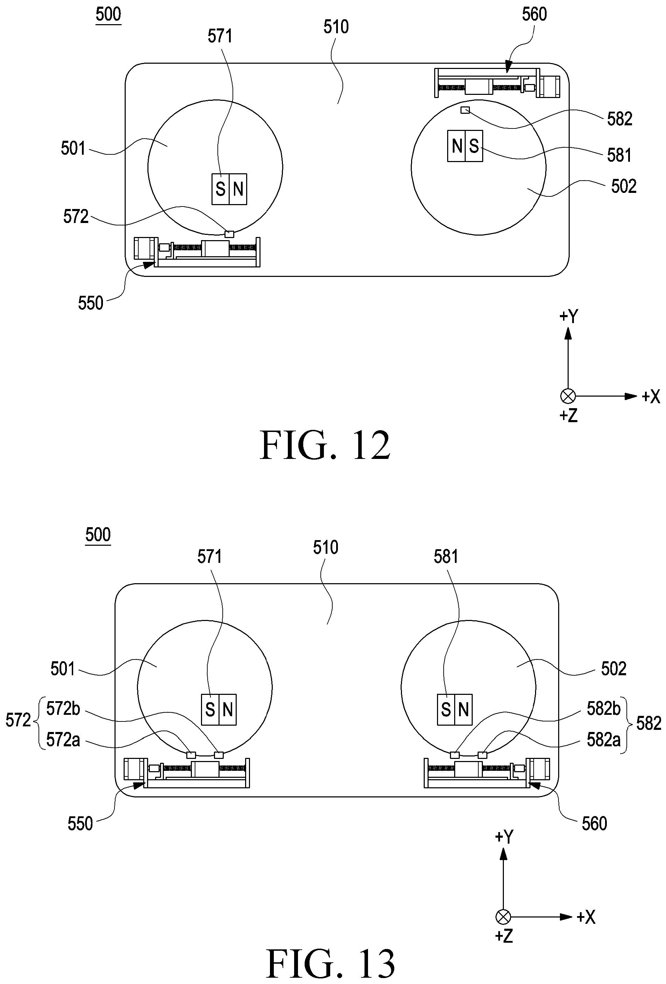

FIG. 12 is a schematic rear view illustrating some components of a wearable electronic device according to an embodiment of the disclosure. FIG. 13 is a schematic rear view illustrating some components of a wearable electronic device according to an embodiment of the disclosure.

Referring to FIG. 12, according to an embodiment, the first Hall sensor 572 and the first magnetic member 571 may be disposed on one side with respect to an imaginary axis passing through the center (e.g., P1 in FIG. 10A) of the first display and the center (e.g., P2 in FIG. 10A) of the second display, and the second Hall sensor 582 and the second magnetic member 581 may be disposed on the opposite side of the first side with respect to the imaginary axis. Alternatively, the first Hall sensor 572 and the first magnetic member 571, and the second Hall sensor 582 and the second magnetic member 581 may be disposed diagonally to each other with respect to a center (e.g., O in FIG. 10A) of the wearable electronic device 500. According to the embodiment described above with reference to FIGS. 8A, 8B, 9A, 9B, 10A, and 10B, the first and second Hall sensor 572 and 582 and the first and second magnetic member 571 and 581 may be disposed on one side with respect to an imaginary axis passing through the center (e.g., P1 in FIG. 10A) of the first display and the center (e.g., P2 in FIG. 10A) of the second display.

Referring to FIG. 13, according to an embodiment, the first Hall sensor 572 may include a pair of Hall sensor elements 572a and 572b spaced apart from each other, and the second Hall sensor 582 may include a pair of Hall sensor elements 582a and 582b spaced apart from each other.

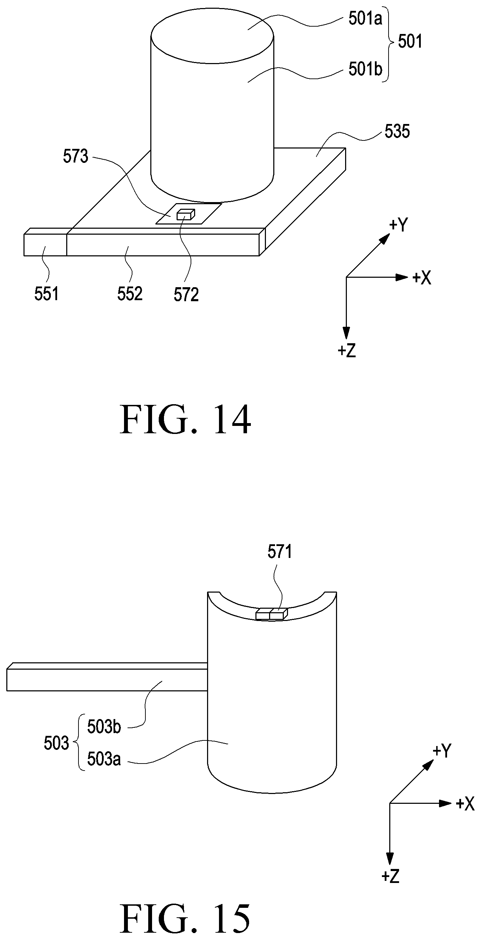

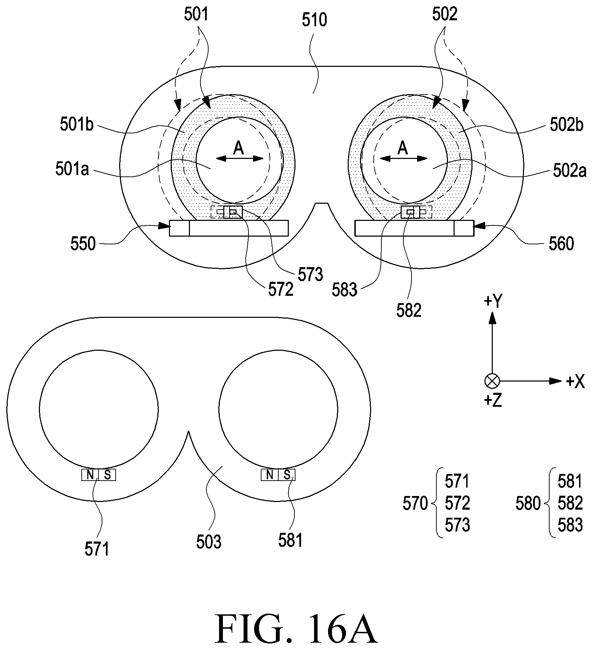

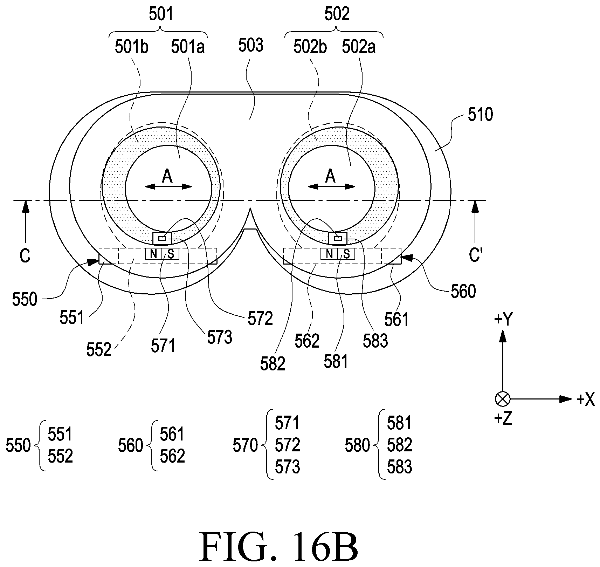

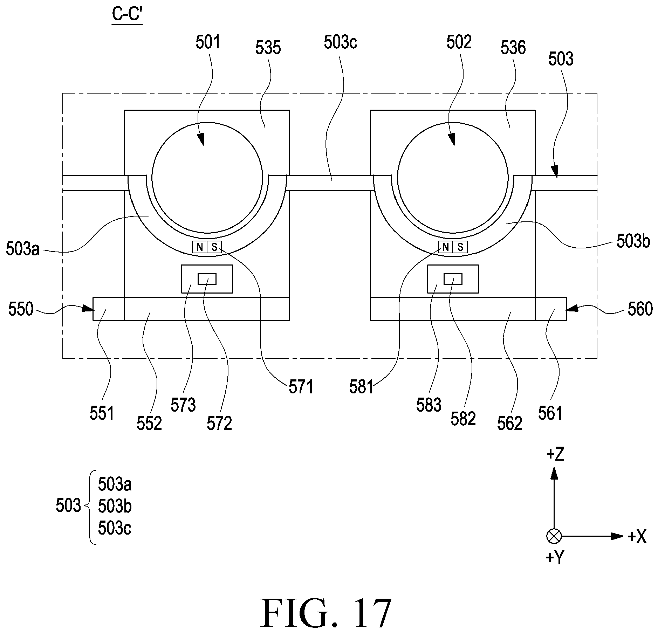

FIG. 14 is a schematic perspective view illustrating a first display and a first movement member of a wearable electronic device according to an embodiment of the disclosure. FIG. 15 is a schematic perspective view illustrating a first magnetic member and a portion of a support structure of a wearable electronic device according to an embodiment of the disclosure. FIG. 16A is a schematic perspective view illustrating a first display and a first movement member of a wearable electronic device according to an embodiment of the disclosure. FIG. 16B is a schematic perspective view illustrating a first display and a first movement member of a wearable electronic device according to an embodiment of the disclosure. FIG. 17 is a sectional view taken along line C-C' of FIG. 16B.

Referring to FIGS. 14, 15, 16A, 16B, and 17, in an embodiment , the wearable electronic device 500 may further include a support structure 503 (e.g., an injection-molded body) disposed in the housing 510. According to an embodiment, the first magnetic member 571 and the second magnetic member 581 may be disposed on the support structure 503, and the first display 501 and the second display 502 may be connected to the support structure 503 to enable slide movement (or linear movement) in the first axis direction A. Referring to FIGS. 15, 16A, 16B, and 17, according to an embodiment, the support structure 503 may include a first support portion 503a disposed around the first display 501 and having the first magnetic member 571 disposed thereon, a second support portion 503b disposed around the second display 502 and having the second magnetic member 581 disposed thereon, and a connection part 503c connecting between the first support portion 503a and the second support portion 503b.

According to an embodiment, the first display 501 may include a first display panel 501a and a first display body tube 501b in which the first display panel 501a is disposed, and the second display 502 may include a second display panel 502a and a second display body tube 502b in which the second display panel 502a is disposed. According to an embodiment, the first movement member 550 and the second movement member 560 of the position movement assembly 550 or 560 may be configured to move the first display body tube 501b and the second display body tube 502b with respect to the housing 510, respectively.

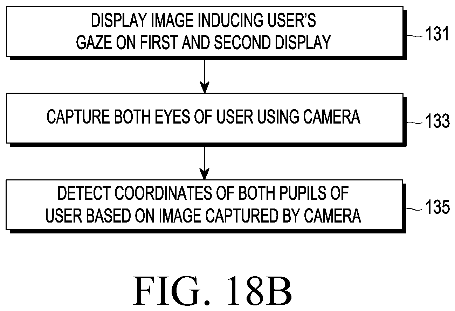

Referring to FIGS. 14, 15, 16A, 16B, and 17, according to an embodiment, the first display 501 may be disposed on the first injection-molded body 535 (e.g., the first injection-molded body 535 in FIG. 6A). According to an embodiment, the first display 501 may further include a first sensor circuit board 573 disposed on the first injection-molded body 535, and the first Hall sensor 572 may be disposed on the first sensor circuit board 573 and electrically connected to the first sensor circuit board 573. According to an embodiment, the second display 502 may be disposed on the second injection-molded body 536 (e.g., the second injection-molded body 536 in FIG. 6A). According to an embodiment, the second display 502 may further include a second sensor circuit board 583 disposed on the second injection-molded body 536, and the second Hall sensor 582 may be disposed on the second sensor circuit board 583 and electrically connected to the second sensor circuit board 583. The second sensor circuit board 583 may be electrically connected to a main circuit board of the wearable electronic device 500. FIGS. 18A and 18B are procedural flowcharts illustrating a control method for a wearable electronic device including a display, according to an embodiment of the disclosure.

The procedural flowcharts of FIGS. 18A and 18B illustrate a control method 1 for adjusting a position of a display (or the first and second display) 501 or 502 of the wearable electronic device (or apparatus) 500 according to the embodiments described above with reference to FIGS. 5A, 5B, 6A to 6C, 7, 8A, 8B, 9A, 9B, 10A to 10C, 11A, 11B, 12 to 15, 16A, 16B, and 17. In an embodiment, according to the control method 1, initial positions of the first and second display 501 and 502 may be configured by using a processor 542, a camera (e.g., the first and second camera) 515 or 516, a position movement assembly 550 or 560, and a position measurement assembly 570 or 580 of the wearable electronic device (or apparatus) 500.

In the disclosure, the "wearable electronic device 500" may also be referred to as "apparatus". In the disclosure, the "both pupils of the user" may refer to the pupil of the user's left eye and the pupil of the right eye. In the disclosure, the "distance from the centers P1 and P2 of the first and second display 501 and 502 to the centers of both pupils of the user" may refer to the distance (or a straight distance or minimum distance) from the center P1 of the first display 501 to the center of the pupil of one eye (e.g., the left eye) of the user facing the first display 501, and the distance from to the center P2 of the second display 502 to the center of the pupil of the other eye (e.g., the right eye) of the user facing the second display 502.

In the following embodiment, respective operations may be sequentially performed, but are not necessarily sequentially performed. For example, the sequential position of each operation may be changed, or at least two operations may be performed in parallel.

According to an embodiment, it may be understood that operations 11 to 17 are performed by a processor (e.g., the processor 542 in FIG. 5B) of the wearable electronic device (e.g., the wearable electronic device 500 in FIGS. 5A and 5B).

Referring to FIG. 18A, in an embodiment, the control method 1 for adjusting a position of the display (or the first and second display) 501 or 502 of the wearable electronic device (or apparatus) 500 may include an operation 11 of receiving a trigger event related to a movement of the display (or the first and second display) 501 or 502, an operation 12 of controlling the position movement assembly 550 or 560 to move the first and second display 501 and 502 to a reference point, an operation 13 of detecting coordinates of the centers of both pupils of the user by using the first and second display 501 and 502 and the camera (or the first and second camera) 515 or 516, an operation 14 of calculating a distance from the centers P1 and P2 of the first and second display 501 and 502 disposed at the reference point to the centers of both pupils of the user, an operation 15 of controlling the position movement assembly 550 or 560 to move the first and second display 501 and 502 such that the centers P1 and P2 of the first and second display 501 and 502 are aligned with the centers of both pupils of the user, respectively, an operation 16 of calculating positions of the first and second display 501 and 502 of which position movement is completed, by using the first and second Hall sensor 572 and 582, and an operation 17 of storing initial positions which correspond to the calculated positions of the first and second display 501 and 502.

According to an embodiment, in the operation 11 of receiving the trigger event related to a movement of the display (or the first and second display) 501 or 502, the trigger event may be caused by the user applying input to a button (e.g., a mechanical or tactile button) disposed on the wearable electronic device (or apparatus) 500, or may be caused by the user applying input using voice commands or body (e.g., head, hand, or eye) movements.

According to an embodiment, in the operation 12 of controlling the position movement assembly 550 or 560 to move the first and second display 501 and 502 to the reference point, the "reference point" may represent a point at which the first and second display 501 and 502 are closest to each other (see FIG. 10A) or a point at which the first and second display 501 and 502 are farthest from each other (see FIG. 10B).

Referring to FIG. 18B, in an embodiment, the operation 13 of detecting the coordinates of the centers of both pupils of the user by using the first and second display 501 and 502 and the camera (or the first and second camera) 515 or 516 may include an operation 131 of displaying an image configured to induce the user's gaze to the first and second display 501 and 502, an operation 133 of capturing the both eyes of the user using the camera 515 or 516, and an operation 135 of detecting the coordinates of the centers of the both pupils of the user, based on the image captured by the camera 515 or 516. For example, in the operation 131, the image configured to induce the user's gaze to the first and second display 501 and 502 may induce the body eyes of the user to face directly the first and second display 501 and 502. For example, in the operation 133, the first camera 515 may capture an image of one eye (e.g., the left eye) of the user facing the first display 501, and the second camera 516 may capture an image of the other eye (e.g., the right eye) of the user facing the second display 502. For example, the operations 131, 133, and 135 may be performed by the processor 542.

According to an embodiment, in the operation 14 of calculating the distance from the centers P1 and P2 of the first and second display 501 and 502 disposed at the reference point to the centers of both pupils of the user, as described above, the "distance from the centers P1 and P2 of the first and second display 501 and 502 to the centers of both pupils of the user" may refer to the distance from the center P1 of the first display 501 to the center of the pupil of one eye (e.g., the left eye) of the user facing the first display 501, and the distance from to the center P2 of the second display 502 to the center of the pupil of the other eye (e.g., the right eye) of the user facing the second display 502.

According to an embodiment, in the operation 15 of controlling the position movement assembly 550 or 560 to move the first and second display 501 and 502 such that the centers P1 and P2 of the first and second display 501 and 502 are aligned with the centers of both pupils of the user, respectively, the position movement assembly 550 or 560 may be controlled by the processor 542. In the disclosure, the state where "the centers P1 and P2 of the first and second display 501 and 502 are aligned with the centers of both pupils of the user, respectively" may refer to a state where the center P1 of the first display 501 is aligned in a straight line with the center of the pupil of one eye (e.g., the left eye) of the user facing the first display 501, and the center P2 of the second display 502 is aligned in a straight line with the center of the pupil of the other eye (e.g., the right eye) of the user facing the second display 502.

According to an embodiment, the operation 15 may include an operation of calculating a movement distance for aligning the centers P1 and P2 of the first and second display 501 and 502 with the centers of both pupils of the user and an operation of controlling the position movement assembly 550 or 560 to move the first and second display 501 and 502 by the calculated distance.

According to an embodiment, in the operation 16 of calculating the positions of the first and second display 501 and 502 of which position movement is completed, by using the first and second Hall sensor 572 and 582, the first Hall sensor 572 may measure a change in magnetic force of the first magnetic member 571 (e.g., see FIGS. 9A and 9B) caused by a change in position of the first display 501, and the wearable electronic device 500 (e.g., the processor 542) may detect a position of the first display 501 based on the change in magnetic force measured by the first Hall sensor 571. According to an embodiment, the second Hall sensor 582 may measure a change in magnetic force of the second magnetic member 581 (e.g., see FIGS. 9A and 9B) caused by a change in position of the second display 502, and the wearable electronic device 500 (e.g., the processor 542) may detect a position of the second display 502 based on the change in magnetic force measured by the second Hall sensor 581.

According to an embodiment, in the operation 17 of storing initial positions which correspond to the calculated positions of the first and second display 501 and 502, the initial positions may be stored in the memory (e.g., the memory 130 in FIG. 1 or the memory 541 in FIG. 5B) of the wearable electronic device 500. Some of the operations may be omitted from or other operations may be added to the control method 1 described above with reference to FIGS. 18A and 18B.

FIG. 19A is a procedural flowchart of a control method for determining and recommending a need for position adjustment of a display of a wearable electronic device, according to an embodiment of the disclosure. FIG. 19B is a view illustrating a guide user interface (UI) provided to recommend position adjustment of a display of a wearable electronic device according to an embodiment of the disclosure.

According to an embodiment, the control method 2 shown in FIG. 19A may be performed after the position movement of the first and second display 501 and 502 of the wearable electronic device 500 is completed by the control method 1 described above with reference to FIGS. 18A and 18B. According to an embodiment, the control method 2 may be performed after the operation 17 of moving the first and second display 501 and 502 of the control method 1 in FIG. 18A.

In the following embodiment, respective operations may be sequentially performed, but are not necessarily sequentially performed. For example, the sequential position of each operation may be changed, or at least two operations may be performed in parallel.

According to an embodiment, it may be understood that operations 21 to 25 are performed by a processor (e.g., the processor 542 in FIG. 5B) of the wearable electronic device (e.g., the wearable electronic device 500 in FIGS. 5A and 5B).

Referring to FIG. 19A, according to an embodiment, the control method 2 may include an operation 21 of operating the wearable electronic device 500 (or apparatus) in a state where the position movement of the first and second display 501 and 502 has been completed (or after the operation 17 of moving the first and second display 501 and 502 in FIG. 18A), an operation 22 of calculating current positions of the first and second display 501 and 502 by using the first and second Hall sensor 572 and 582 at a preconfigured time point, and an operation 23 of determining whether a sum of differences between the current positions of the first and second display 501 and 502 and the stored initial positions is equal to or greater than a first designated distance.

According to an embodiment, in the operation 22 of calculating the current positions of the first and second display 501 and 502 by using the first and second Hall sensor 572 and 582 at a preconfigured time point, the preconfigured time point corresponding to a time point for calculating the current positions of the first and second display 501 and 502 may be configured to vary, such as at preconfigured intervals or at a time point when the image shown on the first and second displays 501, 502 changes. According to an embodiment, the operation 23 of determining whether the sum of differences between the current positions of the first and second display 501 and 502 and the stored initial positions is equal to or greater than the first designated distance may be performed by the processor 542. According to an embodiment, in the operation 23, the first designated distance may be greater than or equal to about 1.5 mm and less than or equal to about 2.5 mm, or greater than or equal to about 1.8 mm and less than or equal to about 2.2 mm, such as about 2 mm.

According to an embodiment, the control method 2 may further include, in case that, as a result of the operation 23, the sum of differences between the current positions of the first and second display 501 and 502 and the stored initial positions exceeds the first designated distance, an operation 24 of determining that the current positions of the first and second display are different from the stored initial positions, and an operation 25 of recommending the user to adjust the positions of the first and second displays 501 and 502.

Referring to FIGS. 19A and 19B, according to an embodiment, the operation 25 may be implemented as a UI displaying a statement recommending adjustment of the position of the display 501 or 502 on the first and second display 501 and 502 as shown in FIG. 19B, but without limitation thereto, may be implemented in various manners of delivering recommendation messages to the user, such as voice guidance.

According to an embodiment, in case that, as a result of the above operation 23, the sum of the differences between the current positions of the first and second display 501 and 502 and the stored initial positions does not exceed the first designated distance, the method may return to the operation 21. Some of the operations may be omitted from or other operations may be added to the control method 2 described above with reference to FIG. 19A.

FIGS. 20A and 20B are procedural flowcharts of a control method for determining and recommending a need for position adjustment of a display 501 or 502 or proper wearing of a wearable electronic device according to an embodiment of the disclosure. FIG. 20C is a view illustrating a guide UI provided to recommend proper wearing of a wearable electronic device according to an embodiment of the disclosure.

According to an embodiment, the control method 3 shown in FIG. 20A may be performed after the position movement of the first and second display 501 and 502 of the wearable electronic device 500 is completed by the control method 1 described above with reference to FIGS. 18A and 18B. According to an embodiment, the control method 3 may be performed after the operation 17 of moving the first and second display 501 and 502 of the control method 1 in FIG. 18A.

In the following embodiment, respective operations may be sequentially performed, but are not necessarily sequentially performed. For example, the sequential position of each operation may be changed, or at least two operations may be performed in parallel.

According to an embodiment, it may be understood that operations 31 to 39 are performed by a processor (e.g., the processor 542 in FIG. 5B) of the wearable electronic device (e.g., the wearable electronic device 500 in FIGS. 5A and 5B).

Referring to FIG. 20A, in an embodiment, the control method 3 may include an operation 31 of detecting that wearing of the wearable electronic device (or apparatus) 500 is released by the user for a predetermined time period, an operation 32 of detecting that wearable electronic device (or apparatus) 500 is re-worn by the user, an operation 33 of detecting the coordinates of the centers of both pupils of the user by using the first and second display 501 and 502 and the camera (or the first and second camera) 515 or 516, an operation 34 of calculating a distance from the centers P1 and P2 of the first and second display 501 and 502 to the coordinates of the centers of both pupils of the user, an operation 35 of determining whether a sum of calculated left and right distance differences exceeds a second designated distance, an operation 36 of, in case that the sum of calculated left and right distance differences exceeds the second designated distance, calculating current positions of the first and second display 501 and 502 through the Hall sensor (or the first and second Hall sensor 572 and 582), and an operation 37 of determining whether a sum of left and right differences between the current positions and the stored initial positions of the first and second display 501 and 502 exceeds a third designated distance. According to an embodiment, in case that the sum of left and right differences between the current positions and the stored initial positions of the first and second display 501 and 502 exceeds the third designated distance, the method may include an operation 38 of recommending the user to adjust the positions of the first and second displays 501 and 502, and an operation 39 of, in case that the sum of left and right differences between the current positions and the stored initial positions of the first and second display 501 and 502 does not exceed the third designated distance, recommending the user to normally wear the wearable electronic device (or apparatus) 500 using the first and second display 501 and 502.

According to an embodiment, the operation 31 of dectecting wearing of the wearable electronic device (or apparatus) 500 being released by the user for a predetermined time period may indicate that the wearable electronic device 500 remains unworn by the user for a predetermined time period or longer after the position movement of the first and second display 501 and 502 is completed by the control method 1 described above with reference to FIGS. 18A and 18B. For example, the wearable electronic device 500 may be configured to transition from a standby mode to a rest mode that consumes less battery than the standby mode when a predetermined time period has elapsed while the wearable electronic device 500 remains unworn.

According to an embodiment, in the operation 32 of detecting that wearable electronic device (or apparatus) 500 is re-worn by the user, the wearable electronic device 500 may detect whether the user is wearing the wearable electronic device by using the cameras (e.g., the cameras 511, 512, and 513 in FIG. 5A and/or the cameras 514, 515, and 516 in FIG. 6A) and/or an additional sensor (e.g., a touch sensor or proximity sensor).

In the following embodiment, respective operations may be sequentially performed, but are not necessarily sequentially performed. For example, the sequential position of each operation may be changed, or at least two operations may be performed in parallel.

According to an embodiment, it may be understood that operations 331 to 333 are performed by a processor (e.g., the processor 542 in FIG. 5B) of the wearable electronic device (e.g., the wearable electronic device 500 in FIGS. 5A and 5B).

Referring to FIG. 20B, in an embodiment, the operation 13 of detecting the coordinates of the centers of both pupils of the user by using the first and second display 501 and 502 and the camera (or the first and second camera) 515 or 516 may include an operation 331 of displaying an image configured to induce the user's gaze to the first and second display 501 and 502, an operation 332 of capturing the both eyes of the user using the camera 515 or 516, and an operation 333 of detecting the coordinates of the centers of the both pupils of the user, based on the image captured by the camera 515 or 516.

According to an embodiment, in the operation 34 of calculating the distance from the centers P1 and P2 of the first and second display 501 and 502 to the coordinates of the centers of both pupils of the user, as described above, the "distance from the centers P1 and P2 of the first and second display 501 and 502 to the centers of both pupils of the user" may refer to the distance from the center P1 of the first display 501 to the center of the pupil of one eye (e.g., the left eye) of the user facing the first display 501, and the distance from to the center P2 of the second display 502 to the center of the pupil of the other eye (e.g., the right eye) of the user facing the second display 502.

According to an embodiment, in the operation 35 of determining whether the sum of calculated left and right distance differences exceeds the second designated distance, the "sum of the calculated left and right distance differences" is a sum of differences in distance between the coordinates of the centers of both pupils of the user aligned with (or corresponding to) the stored initial positions of the first and second displays 501 and 502, and the coordinates of the centers of both pupils of the user detected in the operation 33, which may be the sum of a displacement of the center of the pupil of the left eye and a displacement of the center of the pupil of the right eye. For example, the operation 35 may be performed by the processor 542. According to an embodiment, the second designated distance may be greater than or equal to about 1.5 mm and less than or equal to about 2.5 mm, or greater than or equal to about 1.8 mm and less than or equal to about 2.2 mm, such as about 2 mm.

According to an embodiment, in the operation 37 of determining whether the sum of left and right differences between the current positions and the stored initial positions of the first and second display 501 and 502 exceeds the third designated distance, "the sum of the left and right differences" may indicate a sum of a difference (a left difference or first difference) between the stored initial position and the current position of the first display 501 and a difference (a right difference or second difference) between the stored initial position and the current position of the second display 502. In the operation 37, the wearable electronic device 500 (e.g., the processor 542) may determine, in case that the sum of the left and right differences exceeds the third designated distance, that the current positions of the first and second display 501 and 502 are different from the stored initial positions. According to an embodiment, the third designated distance may be greater than or equal to about 1.5 mm and less than or equal to about 2.5 mm, or greater than or equal to about 1.8 mm and less than or equal to about 2.2 mm, such as about 2 mm.

Referring to FIGS. 20A and 19B, according to an embodiment, the operation 38 of recommending the user to adjust the positions of the first and second displays 501 and 502 may be implemented as a UI displaying a statement recommending adjustment of the position of the display 501 or 502 on the first and second display 501 and 502 as shown in FIG. 19B, but without limitation thereto, may be implemented in various manners of delivering recommendation messages to the user, such as voice guidance.

Referring to FIGS. 20A and 20C, according to an embodiment, the operation 39 of recommending the user to normally wear the wearable electronic device (or apparatus) 500 using the first and second display 501 and 502 may be implemented as a UI displaying a statement recommending normal wearing of the wearable electronic device (or apparatus) 500 as shown in FIG. 20C, but without limitation thereto, may be implemented in various manners of delivering recommendation messages to the user, such as voice guidance. Some of the operations may be omitted from or other operations may be added to the control method described above with reference to FIGS. 20A to 20C.

A head-mounted wearable electronic device (or apparatus) of the related art may generally be configured to manually adjust an inter-pupillary distance (IPD). However, in general, a head-mounted wearable electronic device of the related art may not provide a function to detect current positions of a first and second display corresponding to both eyes of the user. In this case, when the user first wears the device, the positions of the first and second display are initially configured to correspond to the inter-pupillary distance of the user, and it may be difficult to recognize if the positions of the first and second display are unintentionally moved from the initially configured positions during use of the device. For example, examples of unintentional displacement of the positions of the first and second display from their initially configured positions include when at least one of the first and second display is displaced due to factors, such as an external impact while the user is wearing the device, or when the user removes the device and does not wear the device correctly upon re-wearing the device.

For example, if the positions of the first and second display are inadvertently moved from their initially configured positions, the user's pupil may be positioned out of alignment with the center of the first and second display, which may increase the user's fatigue while using the device. The problem is that if the current positions of the first and second display may not be measured, such as with a head-mounted wearable electronic device of the related art, it is difficult for the user to recognize that the first and second display needs to be repositioned.

Aspects of the disclosure are intended to address at least the issues and/or shortcomings described above and to provide at least the advantages described below. The wearable electronic device 500 according to an embodiment (embodiments) of the disclosure may be configured to adjust an inter-pupillary distance. The wearable electronic device 500 according to an embodiment (embodiments) of the disclosure may provide a function to detect a state where the first and second display 501 and 502 are moved unintentionally or detect a state where the user is wearing the wearable electronic device 500 incorrectly after the user wears the wearable electronic device 500, and notify the user of these states by measuring positions of the first and second display 501 and 502 by using the position measurement assembly 570 or 580. The wearable electronic device 500 (or apparatus) of the disclosure may notify the user when the positions of the first and second display 501 and 502 have been unintentionally moved from the initially configured positions, so that the user may readjust the positions of the first and second display to the correct wearing state, i.e., so that the user's pupils are aligned with the centers of the first and second display, thereby reducing user fatigue and providing a pleasant usage environment when using the device.

According to an embodiment of the disclosure, a wearable electronic device 101 may be provided. The electronic device may include a housing 410 or 510, a first display 501 disposed at the housing, a second display 502 disposed spaced apart from the first display at the housing, a position movement assembly 550 or 560 disposed in the housing and configured to move the first display and the second display, a position measurement assembly 570 or 580 disposed in the housing and configured to measure a position of the first display and the second display, and a processor 542 configured to control the position movement assembly to change a first distance corresponding to a distance between a center of the first display and a center of the second display, based on position data measured by the position measurement assembly. The position measurement assembly may include a first magnetic member 571 disposed around the first display, a first Hall sensor 572 configured to measure a position of the first display, based on a change in magnetic force of the first magnetic member, a second magnetic member 581 disposed around the second display, and a second Hall sensor 582 configured to measure a position of the second display, based on a change in magnetic force of the second magnetic member.

According to an embodiment, the position movement assembly may be configured to move the first display and the second display individually or together in a first axis direction passing through the center of the first display and the center of the second display.

According to an embodiment, a direction of arrangement of polarities of the first magnetic member and a direction of arrangement of polarities of the second magnetic member may be parallel to the first axis direction.

According to an embodiment, the first magnetic member and the second magnetic member may be fixedly disposed with respect to the housing. The first Hall sensor and the second Hall sensor may be disposed to be moved together with the first display and the second display, respectively, by the position movement assembly.

According to an embodiment, the first Hall sensor and the second Hall sensor may be fixedly disposed with respect to the housing. The first magnetic member and the second magnetic member may be disposed to be moved together with the first display and the second display, respectively, by the position movement assembly.

According to an embodiment, a first camera 515 disposed around the first display and configured to capture an image of the left eye of the user and a second camera 516 disposed around the second display and configured to capture an image of the right eye of the user may be further included.

According to an embodiment, the processor may be configured to calculate the positions of pupils of the user by using the first camera and the second camera and move the first display and the second display based on the calculated positions of the pupils.

According to an embodiment, the processor may be configured to determine whether the wearable electronic device is being worn correctly by the user, based on at least one of position data of the pupils of the user calculated using the first camera and the second camera and position data of the first display and the second display measured using the position measurement assembly.

According to an embodiment, the position movement assembly may include a first movement member 550 connected to the first display and configured to move the first display in a first axis direction passing through the center of the first display and the center of the second display and a second movement member 560 connected to the second display and configured to move the second display in the first axis direction.

According to an embodiment, the first movement member may include a first motor 551, a first gear 553 connected to the first motor, and a first rail 552 configured to convert a rotation of the first gear into a linear movement of the first display. The second movement member may include a second motor 561, a second gear 563 connected to the second motor, and a second rail 562 configured to convert a rotation of the second gear into a linear movement of the second display.

According to an embodiment, a support structure 503 disposed in the housing may be further included. The first magnetic member and the second magnetic member may be disposed on the support structure, and the first display and the second display may be slidably connected to the support structure.

According to an embodiment, the first Hall sensor, the second Hall sensor, the first magnetic member, and the second magnetic member may be disposed on an identical side with respect to a first axis passing through the center of the first display and the center of the second display.

According to an embodiment, the first Hall sensor and the first magnetic member may be disposed on one side with respect to the first axis passing through the center of the first display and the center of the second display, and the second Hall sensor and the second magnetic member may be disposed on a side opposite to the one side with respect to the first axis.

According to an embodiment, the first Hall sensor may include a pair of Hall sensor elements 572a and 572b spaced apart from each other, and the second Hall sensor may include a pair of Hall sensor elements 582a and 582b spaced apart from each other.

According to an embodiment, the first display may include a first display panel and a first display body tube 501b in which the first display panel 501a is disposed, and the second display may include a second display panel 502a and a second display body tube 502b in which the second display panel is disposed. The position movement assembly may be configured to move the first display body tube and the second display body tube with respect to the housing.

According to an embodiment of the disclosure, a control method 1 for adjusting a position of a display of a wearable electronic device may be provided. The control method may include an operation 11 of receiving a trigger event related to a movement of the display, an operation 12 of controlling a position movement assembly to move a first and second display to a reference point, an operation 13 of detecting coordinates of the centers of both pupils of the user by using the first and second display and a camera, an operation 14 of calculating a distance from the centers of the first and second display disposed at the reference point to the centers of both pupils of the user, an operation 15 of controlling the position movement assembly to move the first and second display such that the centers of the first and second display are aligned with the centers of both pupils of the user, respectively, an operation 16 of calculating positions of the first and second display of which position movement is completed, by using the first and second Hall sensor, and an operation 17 of storing initial positions which correspond to the calculated positions of the first and second display.

According to an embodiment, the method may include an operation 21 of operating the wearable electronic device after the operation 17 of moving the first and second display, an operation 22 of calculating current positions of the first and second display by using the first and second Hall sensor at a preconfigured time point, and an operation 23 of determining whether a sum of differences between the current positions of the first and second display and the stored initial positions is equal to or greater than a first designated distance.

According to an embodiment, the method may further include, an operation (24) of determining that the current positions of the first and second display are different from the stored initial positions in case that the sum of differences between the current positions of the first and second display and the stored initial positions exceeds the first designated distance.

According to an embodiment, the control method may include an operation 31 of detecting that wearing of the wearable electronic device is released by the user for a predetermined time period after the operation 17 of moving the first and second display, an operation 32 of detecting that wearable electronic device is re-worn by the user, an operation 33 of detecting coordinates of the centers of both pupils of the user by using the first and second display and the camera, an operation 34 of calculating a distance from the centers of the first and second display to the coordinates of the centers of both pupils of the user, an operation 35 of determining whether a sum of calculated left and right distance differences exceeds a second designated distance, an operation 36 of, in case that the sum of calculated left and right distance differences exceeds the second designated distance, calculating current positions of the first and second display through a Hall sensor, and an operation 37 of determining whether a sum of left and right differences between the current positions and the stored initial positions of the first and second display exceeds a third designated distance.

According to an embodiment, the method may include an operation 38 of, in case that the sum of left and right differences between the current positions and the stored initial positions of the first and second display exceeds the third designated distance, recommending the user to adjust the positions of the first and second displays, and an operation 39 of, in case that the sum of left and right differences between the current positions and the stored initial positions of the first and second display does not exceed the third designated distance, recommending the user to normally wear the wearable electronic device using the first and second display.

According to an embodiment of the disclosure, the position movement assembly may be further configured to move the first display and the second display individually or together in a first axis direction passing through the center of the first display and the center of the second display.

According to an embodiment of the disclosure, a direction of arrangement of polarities of a first magnetic member disposed around the first display and a direction of arrangement of polarities of a second magnetic member disposed around the second display may be parallel to the first axis direction.

According to an embodiment of the disclosure, one or more non-transitory computer-readable storage media may be provided. The one or more non-transitory computer-readable storage media may store one or more computer programs including computer-executable instructions that, when executed by one or more processors of a wearable electronic device individually or collectively, cause the wearable electronic device to perform operations of adjusting a position of a display of the wearable electronic device. The operations may comprises receiving a trigger event related to a movement of the display, controlling a position movement assembly to move a first and second display to a reference point, detecting coordinates of centers of both pupils of a user by using the first and second display and a camera, calculating a distance from centers of the first and second display disposed at the reference point to the centers of both pupils of the user, controlling the position movement assembly to move the first and second display such that the centers of the first and second display are aligned with the centers of both pupils of the user, respectively, calculating positions of the first and second display of which position movement is completed, by using a first and second Hall sensor, and storing initial positions which correspond to the calculated positions of the first and second display.

According to an embodiment of the disclosure, the operations may further comprises after the moving of the first and second display, operating the wearable electronic device, calculating current positions of the first and second display by using the first and second Hall sensor at a preconfigured time point, and determining whether a sum of differences between the current positions of the first and second display and the stored initial positions is equal to or greater than a first designated distance.

It should be understood that the issues to be addressed by the disclosure are not limited to those mentioned above, and may be variously defined within a range that does not deviate from the spirit and scope of the disclosure. The effects that may be acquired from the disclosure are not limited to the effects mentioned above, and various effects that may be directly or indirectly identified through this document may be provided.

The display, the position movement assembly, the position measurement assembly, and the wearable electronic device including the aforementioned components of the disclosure described above is not limited to the embodiments and drawings described above, and it will be apparent to those of ordinary skill in the art to which the present disclosure pertains that various substitutions, modifications, and changes are possible within the technical scope of the disclosure.

Although an embodiment of the disclosure has been illustrated and described, it should be appreciated that the embodiment is not intended to limit the disclosure, but is provided for the sake of illustration. It will be apparent to those skilled in the art that various changes may be made to the form and details of the disclosure without departing from the overall perspective of the disclosure including the appended claims and equivalents thereof. It will be appreciated that various embodiments of the disclosure according to the claims and description in the specification can be realized in the form of hardware, software or a combination of hardware and software.

Any such software may be stored in non-transitory computer readable storage media. The non-transitory computer readable storage media store one or more computer programs (software modules), the one or more computer programs include computer-executable instructions that, when executed by one or more processors of an electronic device, cause the electronic device to perform a method of the disclosure.

Any such software may be stored in the form of volatile or non-volatile storage, such as, for example, a storage device like read only memory (ROM), whether erasable or rewritable or not, or in the form of memory, such as, for example, random access memory (RAM), memory chips, device or integrated circuits or on an optically or magnetically readable medium, such as, for example, a compact disk (CD), digital versatile disc (DVD), magnetic disk or magnetic tape or the like. It will be appreciated that the storage devices and storage media are various embodiments of non-transitory machine-readable storage that are suitable for storing a computer program or computer programs comprising instructions that, when executed, implement various embodiments of the disclosure. Accordingly, various embodiments provide a program comprising code for implementing apparatus or a method as claimed in any one of the claims of this specification and a non-transitory machine-readable storage storing such a program.

While the disclosure has been shown and described with reference to various embodiments thereof, it will be understood by those skilled in the art that various changes in form and details may be made therein without departing from the spirit and scope of the disclosure as defined by the appended claims and their equivalents.

## Claims

1. A wearable electronic device (101) comprising:
a housing (410; 510);
a first display (501) disposed at the housing;
a second display (502) disposed spaced apart from the first display at the housing;
a position movement assembly (550, 560) disposed in the housing and configured to move the first display and the second display;
a position measurement assembly (570, 580) disposed in the housing and configured to measure positions of the first display and the second display; and
a processor (542) configured to control the position movement assembly to change a first distance corresponding to a distance between a center of the first display and a center of the second display, based on position data measured by the position measurement assembly,
wherein the position measurement assembly comprises:
a first magnetic member (571) disposed around the first display;
a first Hall sensor (572) configured to measure a position of the first display, based on a change in magnetic force of the first magnetic member;
a second magnetic member (581) disposed around the second display; and
a second Hall sensor (582) configured to measure a position of the second display, based on a change in magnetic force of the second magnetic member.

2. The wearable electronic device of claim 1, wherein the position movement assembly is configured to move the first display and the second display individually or together in a first axis direction passing through the center of the first display and the center of the second display.

3. The wearable electronic device of claim 2, wherein a direction of arrangement of polarities of the first magnetic member and a direction of arrangement of polarities of the second magnetic member are parallel to the first axis direction.

4. The wearable electronic device of any one of claims 1 to 3, wherein the first magnetic member and the second magnetic member are fixedly disposed with respect to the housing, and
wherein the first Hall sensor and the second Hall sensor are disposed to be moved together with the first display and the second display, respectively, by the position movement assembly.

5. The wearable electronic device of any one of claims 1 to 3, wherein the first Hall sensor and the second Hall sensor are fixedly disposed with respect to the housing, and
wherein the first magnetic member and the second magnetic member are disposed to be moved together with the first display and the second display, respectively, by the position movement assembly.

6. The wearable electronic device of one of claims 1 to 5, further comprising a first camera (515) disposed around the first display and configured to capture an image of a left eye of a user and a second camera (516) disposed around the second display and configured to capture an image of a right eye of the user.

7. The wearable electronic device of claim 6, wherein the processor is configured to calculate positions of pupils of the user by using the first camera and the second camera and move the first display and the second display based on the calculated positions of the pupils.

8. The wearable electronic device of claim 6 or 7, wherein the processor is configured to determine whether the wearable electronic device is being worn correctly by the user, based on at least one of position data of the pupils of the user calculated using the first camera and the second camera and position data of the first display and the second display measured using the position measurement assembly.

9. The wearable electronic device of any one of claims 1 to 8, wherein the position movement assembly comprises:
a first movement member (550) connected to the first display and configured to move the first display in the first axis direction passing through the center of the first display and the center of the second display; and
a second movement member (560) connected to the second display and configured to move the second display in the first axis direction.

10. The wearable electronic device of claim 9, wherein the first movement member comprises:
a first motor (551);
a first gear (553) connected to the first motor; and
a first rail (552) configured to convert a rotation of the first gear into a linear movement of the first display, and
wherein the second movement member comprises:
a second motor (561);
a second gear (563) connected to the second motor; and
a second rail (562) configured to convert a rotation of the second gear into a linear movement of the second display.

11. The wearable electronic device of any one of claims 1 to 10, further comprising a support structure (503) disposed in the housing,
wherein the first magnetic member and the second magnetic member are disposed on the support structure, and the first display and the second display are slidably connected to the support structure.

12. The wearable electronic device of any one of claims 1 to 11, wherein the first Hall sensor, the second Hall sensor, the first magnetic member, and the second magnetic member are disposed on an identical side with respect to a first axis passing through the center of the first display and the center of the second display.

13. The wearable electronic device of any one of claims 1 to 11, wherein the first Hall sensor and the first magnetic member are disposed on one side with respect to the first axis passing through the center of the first display and the center of the second display, and the second Hall sensor and the second magnetic member are disposed on a side opposite to the one side with respect to the first axis.

14. The wearable electronic device of any one of claims 1 to 13, wherein the first Hall sensor comprises a pair of Hall sensor elements (572a, 572b) spaced apart from each other, and
wherein the second Hall sensor comprises a pair of Hall sensor elements (582a, 582b) spaced apart from each other.

15. A method (1) for adjusting a position of a display of a wearable electronic device, the method comprising:
an operation (11) of receiving a trigger event related to a movement of the display;
an operation (12) of controlling a position movement assembly to move a first and second display to a reference point;
an operation (13) of detecting coordinates of centers of both pupils of a user by using the first and second display and a camera;
an operation (14) of calculating a distance from centers of the first and second display disposed at the reference point to the centers of both pupils of the user;
an operation (15) of controlling the position movement assembly to move the first and second display such that the centers of the first and second display are aligned with the centers of both pupils of the user, respectively;
an operation (16) of calculating positions of the first and second display of which position movement is completed, by using a first and second Hall sensor; and
an operation (17) of storing initial positions which correspond to the calculated positions of the first and second display.
